# EUROPEAN PATENT APPLICATION

(11) **EP 4 694 161 A1**
(43) Date of publication of application: **11.02.2026**
(21) Application number: 24867182.8
(22) Date of filing: 14.08.2024
(51) Int. Cl.: H04N 23/60, G06F 1/32

(54) **VIDEO PROCESSING METHOD, ELECTRONIC DEVICE, AND COMPUTER-READABLE STORAGE MEDIUM**

(30) Priority: 18.09.2023 CN 202311209386
(71) Applicant: Huawei Technologies Co., Ltd., Shenzhen, Guangdong 518129 (CN)
(72) Inventor: LI, Lerenhan, Shenzhen, Guangdong 518129 (CN); WANG, Yinting, Shenzhen, Guangdong 518129 (CN); LEI, Yi, Shenzhen, Guangdong 518129 (CN); ZHANG, Xi, Shenzhen, Guangdong 518129 (CN); AO, Huanhuan, Shenzhen, Guangdong 518129 (CN)
(74) Representative: Pfenning, Meinig & Partner mbB
(86) International application number: PCT/CN2024/112142
(87) International publication number: WO 2025/060765

(57) **Abstract**

Embodiments of this application disclose a video processing method, an electronic device, and a computer-readable storage medium. The method includes: In a video recording process, an electronic device obtains raw image data and metadata, and processes the raw image data by using an image signal processor, to obtain first video data; and when exiting video recording, obtains a first video file, and stores the first video file and the metadata, where the first video file is a video file generated by encoding the first video data. A gallery application invokes required metadata based on a video algorithm that needs to be performed, and processes the first video file to obtain a second video file, where video quality of the second video file is higher than video quality of the first video file. In this way, when the video recording ends, a basic-quality video is obtained, and a real-time requirement is met. The gallery application further processes the basic-quality video, so that a user obtains a video with higher quality on the premise that the real-time requirement is met.

## Description

This application claims priority to Chinese Patent Application No. 202311209386.2, filed with the China National Intellectual Property Administration on September 18, 2023 and entitled "VIDEO PROCESSING METHOD, ELECTRONIC DEVICE, AND COMPUTER-READABLE STORAGE MEDIUM", which is incorporated herein by reference in its entirety.

### TECHNICAL FIELD

This application relates to the field of image technologies, and in particular, to a video processing method, an electronic device, and a computer-readable storage medium.

### BACKGROUND

With continuous popularization of electronic devices such as mobile phones, recording videos by using a video recording function of the electronic devices such as the mobile phones gradually becomes a trend.

Currently, in a video recording process, an electronic device like a mobile phone first shoots a raw image (raw image) by using a camera, and then performs frame-by-frame processing on the raw image in real time by using an image signal processor (Image Signal Processor, ISP), to obtain a processed video image. When video recording ends, the electronic device like the mobile phone may obtain a final video generated from a plurality of frames of video images. The final video is a video shot by a user.

However, time of processing the raw image by the ISP is usually limited by real-time performance. As a result, quality of the video image processed by the ISP is relatively low, and consequently, quality of the video obtained by the user is relatively low.

### SUMMARY

Embodiments of this application provide a video processing method, an electronic device, and a computer-readable storage medium, to resolve a problem that video quality of a video shot by an existing electronic device is relatively poor.

According to a first aspect, an embodiment of this application provides a video processing method, applied to an electronic device. A camera application and a gallery application are installed on the electronic device. After displaying a video recording viewfinder interface of the camera application, the electronic device receives a first operation performed on the video recording viewfinder interface, and enters video recording; in a video recording process, obtains raw image data and metadata required by a video algorithm in a second processing process, and performs a first processing process on the raw image data by using an image signal processor, to obtain first video data; and if a second operation performed on the video recording viewfinder interface is received in the video recording process, exits the video recording, obtains a first video file, stores the first video file and the metadata, and updates the first video file into the gallery application, where the first video file is a video file generated by encoding the first video data. The gallery application performs the second processing process on the first video file by invoking the metadata based on the video algorithm in the second processing process, to obtain a second video file, and stores the second video file, where video quality of the second video file is higher than video quality of the first video file.

The second processing process includes a first-type video algorithm and/or a second-type video algorithm, the first-type video algorithm is a video algorithm that has not been performed in the first processing process, and the second-type video algorithm is a video algorithm that has been performed in the first processing process but whose execution effect does not reach an optimal target effect.

It can be learned from the foregoing that, in this embodiment of this application, in the video recording process, the metadata required in the second processing process subsequently performed by the gallery application is collected in advance, and the first processing process is performed on the raw image data in real time by using the ISP, so that the first video file can be obtained when the video recording ends. The first video file can be viewed by a user, and a real-time requirement of video recording is met. After the first video file is obtained, the gallery application invokes the metadata to further perform the second processing process on the first video file, to obtain the second video file with higher quality. In this way, a basic-quality video (i.e., the first video file) can be obtained when the video recording ends, so that the real-time requirement is met. After the first video file is updated into the gallery application, the gallery application further performs, based on the metadata collected in advance, a video algorithm that has not been performed in the first processing process, and a video algorithm that has been performed in the first processing process but whose execution effect does not reach an optimal target effect due to real-time performance or the like, to improve video quality of the shot basic-quality video, and obtain a video with higher quality. In this way, the user can obtain the video with higher quality on the premise that the real-time requirement is met, so that user experience is improved.

In some possible implementations of the first aspect, if the electronic device detects that the camera application is closed or the camera application runs in a background, or a third operation performed on a first thumbnail is received, the gallery application performs the second processing process on the first video file by invoking the metadata based on the video algorithm in the second processing process, to obtain the second video file. The first thumbnail is a thumbnail that is of the first video file and that is displayed in the video recording viewfinder interface after the second operation is received, in other words, a thumbnail that is of the first video file and that is displayed in the video recording viewfinder interface when the video recording is exited.

Comparatively, when video recording ends but the camera runs in the foreground, if the gallery application performs the second processing process on the first video file by invoking the metadata, because the camera application still needs to occupy a computing resource, a memory resource, and the like to perform processing processes such as image capturing and video stream previewing, and the gallery application also needs to occupy a computing resource, a memory resource, and the like to run the video algorithm in the second processing process, a large quantity of computing resources, memory resources, and the like may be occupied, and the processor is in a high load state for a long time. As a result, problems such as device freezing, device overheating, and high device power consumption are caused, affecting user experience.

After the video recording ends, the gallery application performs the second processing process on the first video file by invoking the metadata only after the camera application is closed, the camera application runs in the background, or the third operation performed on the first thumbnail is received. In this case, the electronic device does not need to perform processing processes such as image capturing and video stream previewing. Therefore, there is a relatively low probability that problems such as device freezing, device overheating, and high device power consumption occur, so that user experience is improved.

When the video recording ends and the camera application runs in the foreground, if the user needs to view a shot video (i.e., the third operation is received), the electronic device may trigger the gallery application in a timely manner to further process the basic-quality video based on the metadata, and obtain the second video file with higher quality in a timely manner, so that the user can view the video with higher quality in a timely manner. When the user views the first video file, the camera application jumps to the background for running, and a video preview state of the gallery application is entered. In this case, processing processes such as image capturing and video stream previewing do not need to be performed.

In some possible implementations of the first aspect, if the camera application is closed or the camera application runs in the background, and a preset trigger condition is detected, the gallery application performs the second processing process on the first video file by invoking the metadata based on the video algorithm in the second processing process, to obtain the second video file.

The preset trigger condition includes any one of the following: a fourth operation performed on a second thumbnail or a trigger control, an operation of starting the gallery application, an operation of viewing or playing the first video file, an operation of sharing the first video file, or an operation of editing the first video file is received, a system of the electronic device is in an idle state, and a screen of the electronic device is turned off or enters sleep mode.

The second thumbnail is a thumbnail that is of the first video file and that is displayed in the gallery application, and the trigger control is a control that is displayed in the gallery application and that is used to trigger video algorithm processing on the first video file.

In this implementation, when the camera application runs in the background or is closed, whether the preset trigger condition is met is further determined, and only when the preset trigger condition is met, the gallery application further processes the first video file by invoking the metadata. In this way, when the user needs to perform an operation such as viewing, editing, or sharing on a shot video, the gallery application can process the first video file in a timely manner, so that the user can obtain a video with higher quality in a timely manner. In addition, the gallery application may further process the first video file by invoking the metadata only when the system is idle, the screen is turned off, or the screen enters sleep mode, so that problems such as device freezing and device overheating can be further alleviated.

In some possible implementations of the first aspect, receiving the first operation performed on the video recording viewfinder interface, and entering the video recording include:
receiving an operation performed on a video recording mode control in the video recording viewfinder interface, and determining a video recording mode as a target recording mode; and receiving an operation performed on a recording control in the video recording viewfinder interface, and entering video recording in the target recording mode, where the first operation includes the operation performed on the video recording mode control and the operation performed on the recording control.

In this case, the video algorithm in the second processing process includes a plurality of target video algorithms corresponding to the target recording mode. Therefore, during metadata collection, metadata required by the target video algorithm may be collected. In the plurality of target video algorithms, execution of some target video algorithms requires metadata, and execution of some target video algorithms may not require metadata.

In a scenario of the target recording mode, the plurality of target video algorithms corresponding to the target recording mode have a preset algorithm execution sequence. In this case, the gallery application sequentially performs the target video algorithms according to the algorithm execution sequence of the plurality of target video algorithms, and when the plurality of target video algorithms are performed, if the target video algorithms require metadata, invokes the corresponding metadata to perform video algorithm processing, or if the target video algorithms do not require metadata, may not invoke the metadata to perform video algorithm processing. After the plurality of target video algorithms are sequentially performed by invoking the metadata required by the target video algorithms, the second video file can be obtained by performing an encoding operation. In this case, the video algorithm in the second processing process includes the plurality of target video algorithms corresponding to the target recording mode, and the target video algorithm may be the first-type video algorithm or the second-type video algorithm.

In this implementation, based on the video processing framework in which the first processing process is performed in the video recording process and the second processing process is performed by the gallery application after the video recording ends, video recording modes can be enriched, and video quality and a real-time requirement can be balanced in the target recording mode, so that the user can obtain a video with better quality and richer video recording modes, thereby improving user experience.

In some possible implementations of the first aspect, that the gallery application performs the second processing process on the first video file by invoking the metadata based on the video algorithm in the second processing process, to obtain the second video file includes:

The gallery application sequentially performs, based on the first video file and the metadata according to an algorithm execution sequence of the plurality of target video algorithms corresponding to the target recording mode, a phased algorithm processing process of each target video algorithm, to obtain the second video file.

The phased algorithm processing process of each target video algorithm includes:
detecting whether the preset trigger condition is met; if the preset trigger condition is met, performing a decoding operation on a first target video file to obtain first target video data; if the current target video algorithm does not require metadata, performing the target video algorithm on the first target video data to obtain second target video data, or if the current target video algorithm requires metadata, invoking the metadata required by the current target video algorithm and performing the target video algorithm on the first target video data to obtain second target video data; and performing an encoding operation on the second target video data to obtain a second target video file, and storing the second target video file; and
detecting whether a preset stop condition is met; and if the preset stop condition is not met, entering a phased algorithm processing process of a next target video algorithm; or if the preset stop condition is met, determining the second target video file in the current phased algorithm processing process as the second video file, where the preset stop condition is that the plurality of target video algorithms are completely performed.

The first target video file is the first video file or a second target video file in a previous phased algorithm processing process, and the first target video data is the first video data or video data obtained by decoding the second target video file in the previous phased algorithm processing process.

In this implementation, the second processing process is performed in a phased manner, so that problems such as device freezing and device overheating can be further alleviated, and user experience can be improved.

In some possible implementations of the first aspect, the method further includes: if it is detected, in the phased algorithm processing process of the target video algorithm, that a preset interrupt trigger condition is met, stopping performing the phased algorithm processing process, storing result data that has been processed in the phased algorithm processing process, and continuing performing the interrupted phased algorithm processing process from an interrupt point based on the result data when it is detected that the preset trigger condition is met; or stopping performing the phased algorithm processing process, storing the first target video file in the phased algorithm processing process, and re-performing the interrupted phased algorithm processing process based on the first target video file when it is detected that the preset trigger condition is met. In some possible implementations of the first aspect, the preset interrupt trigger condition includes at least one of the following: The electronic device is powered off, a device temperature of the electronic device is greater than a preset temperature threshold, a running memory of the electronic device is less than a preset memory threshold, and an operation indicating to interrupt processing is received. In this way, the algorithm processing process of each target video algorithm is performed in a phased manner, and an interrupt mechanism is set, so that related data can be stored in a timely manner when algorithm processing is interrupted, and there is no need to re-perform all the target video algorithms, thereby better implementing the second processing process.

In some possible implementations of the first aspect, the method further includes: when each phased algorithm processing process is sequentially performed, if the current phased algorithm processing process is completed, replacing the second target video file in the previous phased algorithm processing process in a storage medium with the second target video file corresponding to the current phased algorithm processing process; and displaying, by the gallery application, a thumbnail of a second target video file in each phased algorithm processing process.

In this implementation, the processing result of each phased algorithm processing process is stored, so that the user can view the result of each phased algorithm processing process in the gallery application, thereby improving user experience.

In some possible implementations of the first aspect, the method further includes:

The gallery application displays a third thumbnail of the first video file.

That the gallery application performs the second processing process on the first video file by invoking the metadata based on the video algorithm in the second processing process, to obtain the second video file includes:
receiving a fifth operation performed on the third thumbnail, where the fifth operation is used to trigger the gallery application to play the first video file;
in response to the fifth operation, performing, by the gallery application, a decoding operation on the first video file to obtain the first video data, where the first video data includes a plurality of to-be-processed image frames; and for each to-be-processed image frame, sequentially performing each target video algorithm on the to-be-processed image frame according to the algorithm execution sequence by invoking the metadata required by the target video algorithm, to obtain a target image frame, and sending the target image frame for display, where in a process of sequentially performing each target video algorithm, if a target video algorithm does not require metadata, the metadata is not used to perform video algorithm processing, or if a target video algorithm requires metadata, the corresponding metadata is invoked to perform video algorithm processing; and
after each target image frame is sent for display, performing, by the gallery application, an encoding operation on each target image frame to obtain the second video file, and replacing the first video file in a storage medium with the second video file.

In this implementation, when the user needs to play the first video file, the first video file is further processed during video playing, and an image obtained through processing is sent for display in real time, to implement "processing while playing", thereby improving user experience.

According to a second aspect, an embodiment of this application provides an electronic device, including a memory, a processor, and a computer program that is stored in the memory and that is executable on the processor. The processor implements the method according to any implementation of the first aspect when executing the computer program.

According to a third aspect, an embodiment of this application provides a computer-readable storage medium. The computer-readable storage medium stores a computer program. When the computer program is executed by a processor, the method according to any implementation of the first aspect is implemented.

According to a fourth aspect, an embodiment of this application provides a chip system. The chip system includes a processor, the processor is coupled to a memory, and the processor executes a computer program stored in the memory, to implement the method according to any implementation of the first aspect. The chip system may be a single chip or a chip module including a plurality of chips.

According to a fifth aspect, an embodiment of this application provides a computer program product. When the computer program product runs on an electronic device, the electronic device is enabled to perform the method according to the first aspect.

It may be understood that, for beneficial effects of the second aspect to the fifth aspect, refer to related descriptions in the first aspect. Details are not described herein again.

### BRIEF DESCRIPTION OF DRAWINGS

FIG. 1A-1 to FIG. 1A-4 are a diagram of a video recording scenario according to an embodiment of this application;
FIG. 1B is a diagram of a video processing process according to an embodiment of this application;
FIG. 1C is a diagram of an ISP processing process according to an embodiment of this application;
FIG. 1D is a diagram of an ISP chip processing process according to an embodiment of this application;
FIG. 2 is a diagram of a structure of an electronic device 200 according to an embodiment of this application;
FIG. 3 is a block diagram of a video recording system architecture of an electronic device 200 according to an embodiment of this application;
FIG. 4 is a block diagram of a procedure of a video processing method according to an embodiment of this application;
FIG. 5A-1 to FIG. 5A-5 are a diagram of a video recording process according to an embodiment of this application;
FIG. 5B-1 to FIG. 5B-3 are a diagram of a video recording process according to an embodiment of this application;
FIG. 5C-1 to FIG. 5C-5 are a diagram of a video operation according to an embodiment of this application;

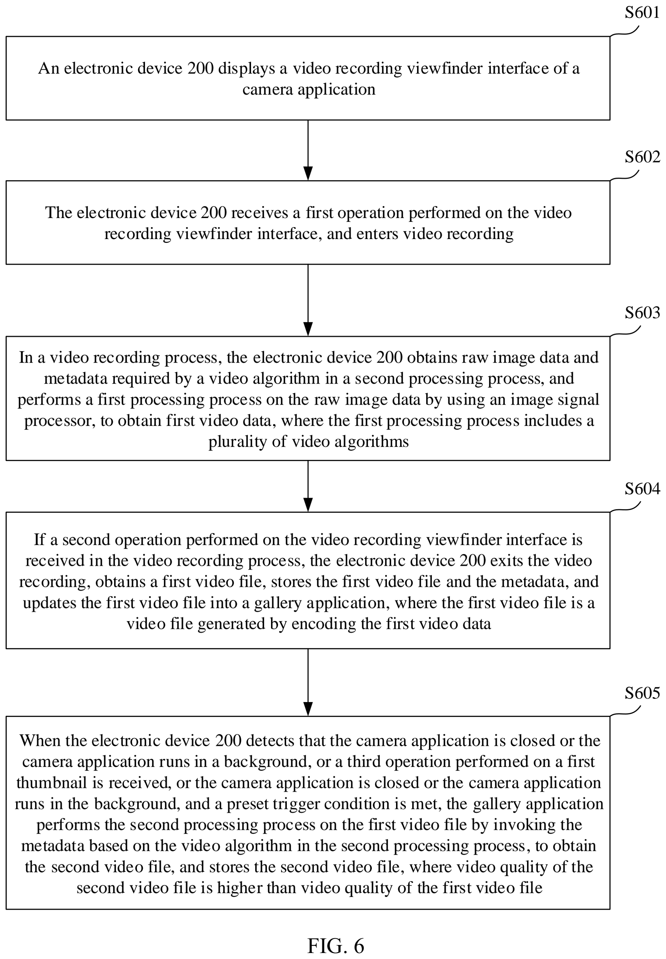

FIG. 6 is a block diagram of another procedure of a video processing method according to an embodiment of this application;

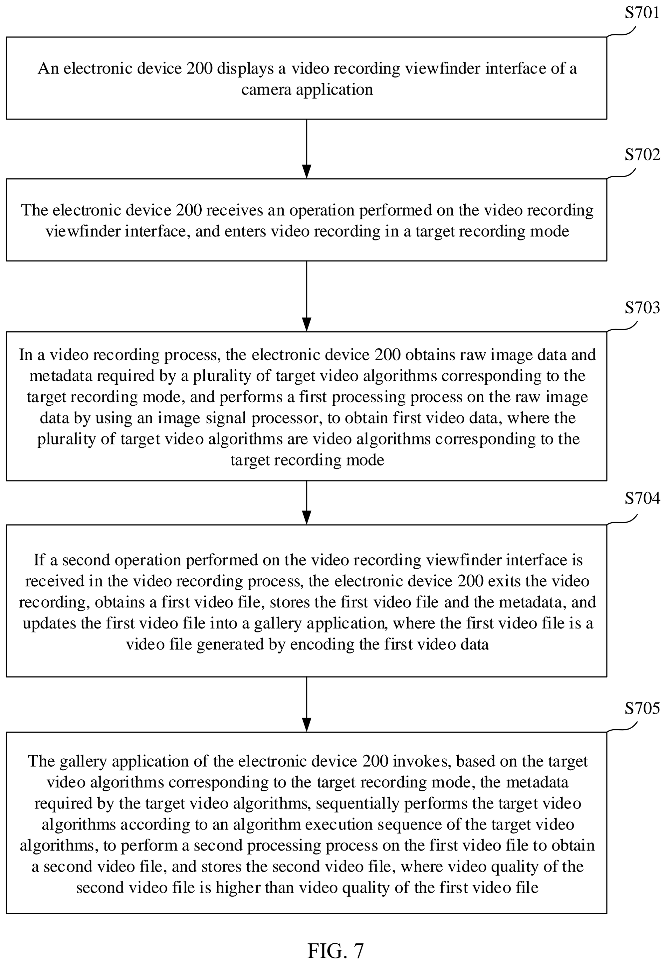

FIG. 7 is a block diagram of another procedure of a video processing method according to an embodiment of this application;

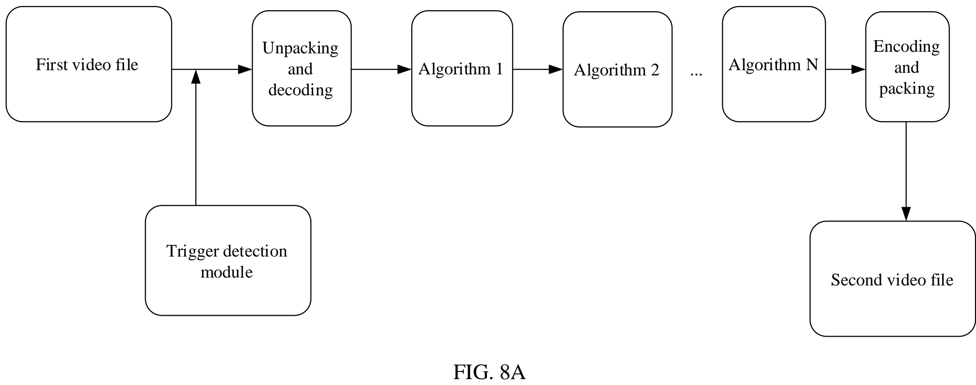

FIG. 8A is a diagram of a second processing process according to an embodiment of this application;

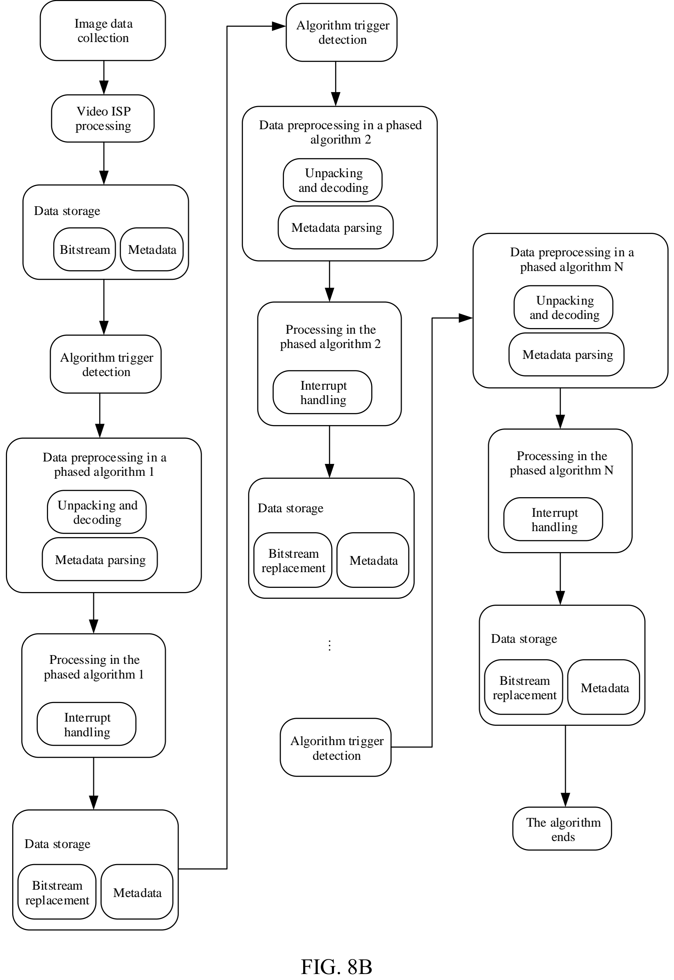

FIG. 8B is a diagram of phased processing in a second processing process according to an embodiment of this application;

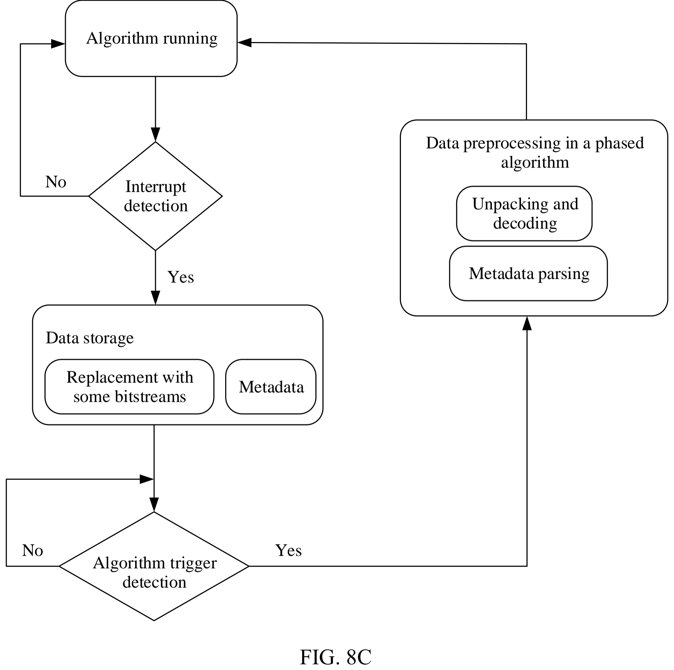

FIG. 8C is a diagram of an interrupt handling process according to an embodiment of this application;

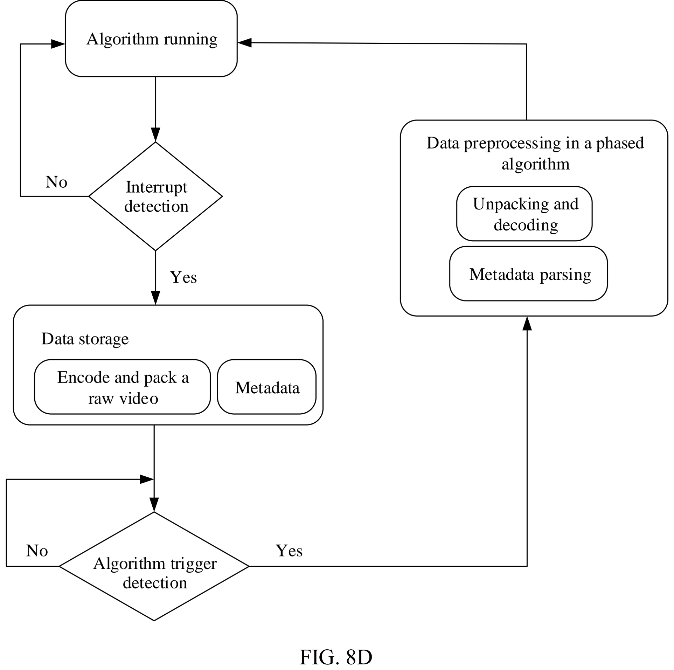

FIG. 8D is a diagram of an interrupt handling process according to an embodiment of this application;

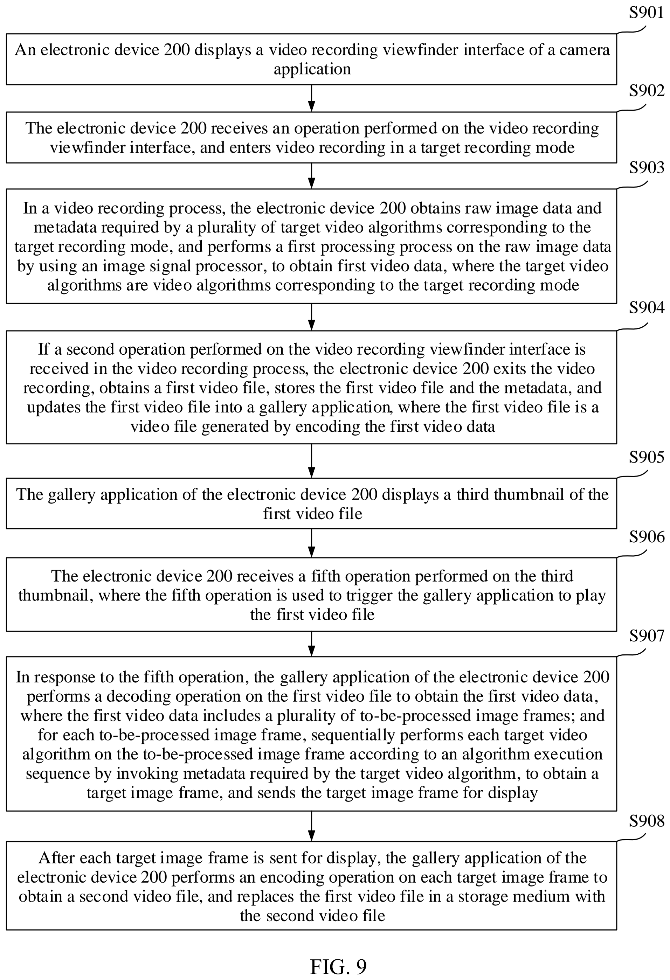

FIG. 9 is a block diagram of another procedure of a video processing method according to an embodiment of this application;

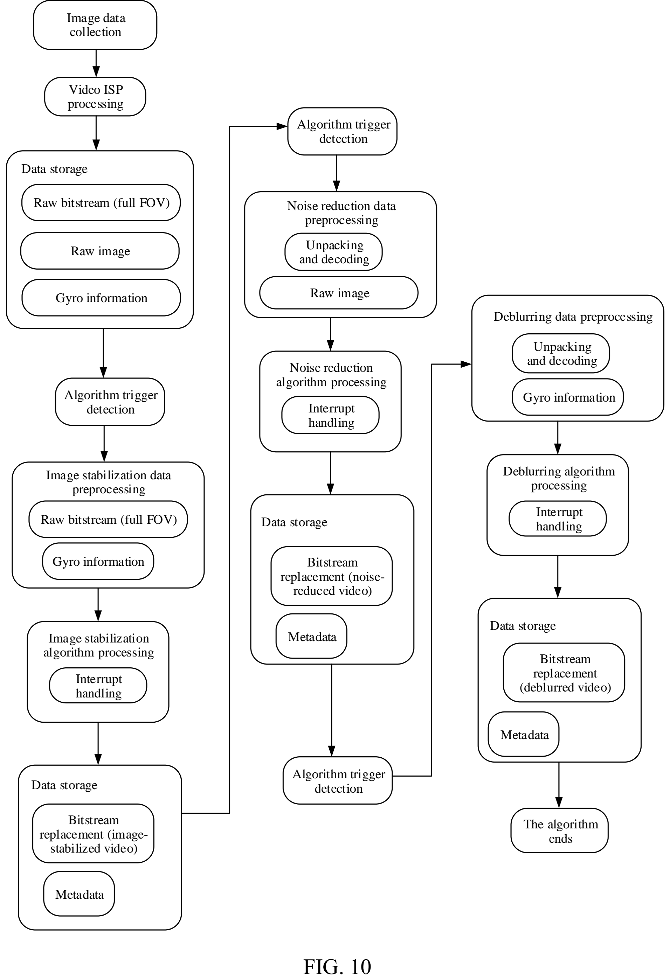

FIG. 10 is a diagram of a video processing process in a night motion mode according to an embodiment of this application; and

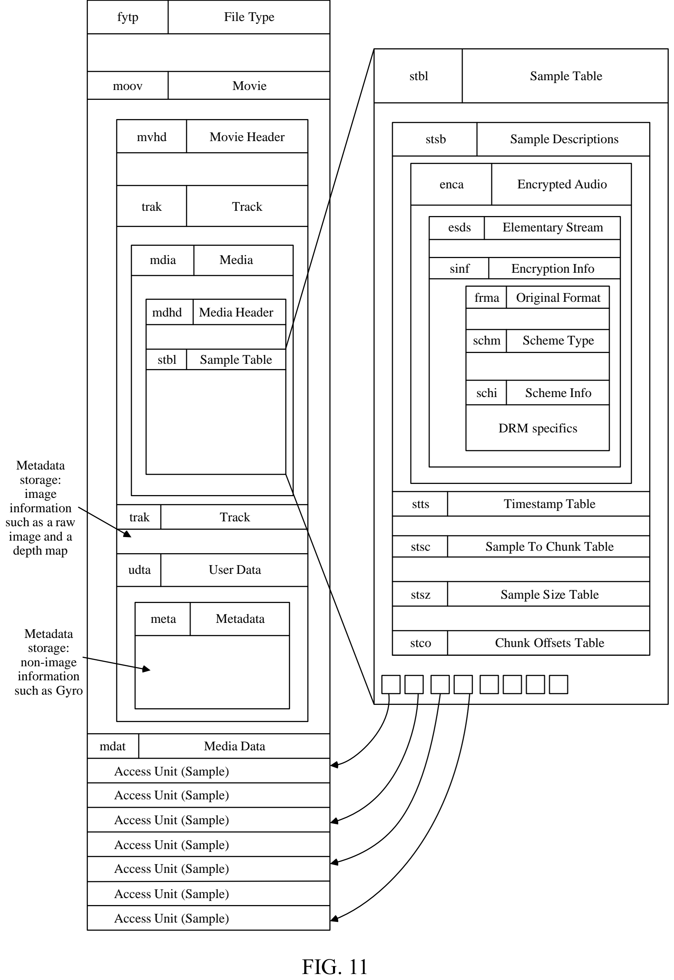

FIG. 11 is a diagram of metadata storage according to an embodiment of this application.

### DESCRIPTION OF EMBODIMENTS

In the following descriptions, for illustration instead of limitation, specific details such as a particular system structure and a technology are provided to make a thorough understanding of embodiments of this application.

### 1. Video recording (video recording) scenario

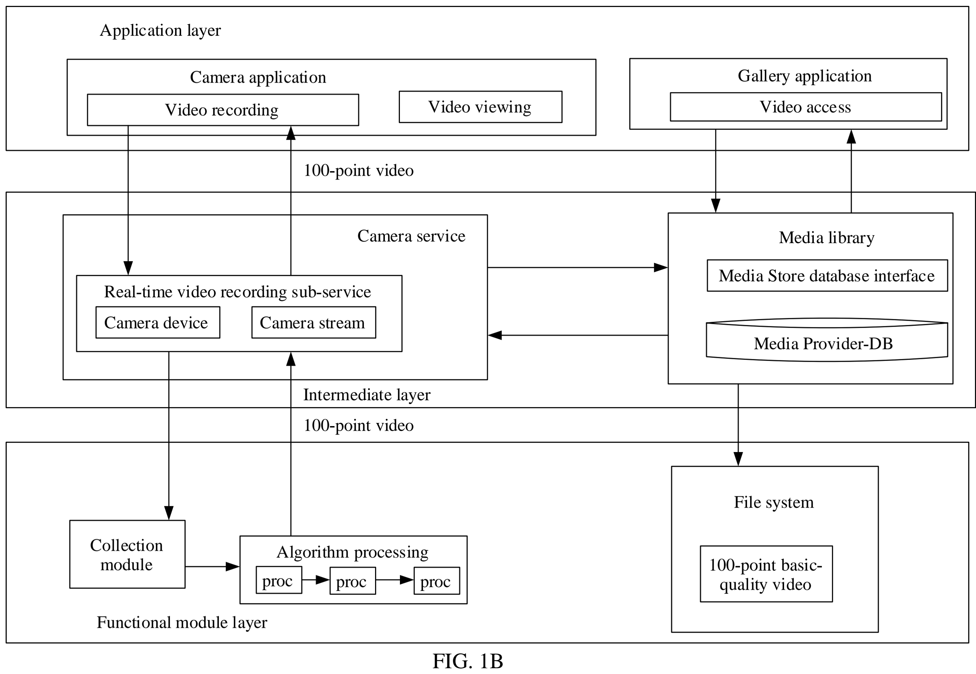

The following describes an example of a video recording process with reference to FIG. 1A-1 to FIG. 1A-4 and FIG. 1B. FIG. 1A-1 to FIG. 1A-4 are a diagram of a video recording scenario according to an embodiment of this application, and FIG. 1B is a block diagram of a video recording system architecture according to an embodiment of this application.

As shown in FIG. 1A-1 to FIG. 1A-4, icons of a camera application 112, a gallery application 113, a calendar application, a setting application, and the like are displayed on a home screen 111 of a mobile phone 11. After receiving a tap operation performed on the icon of the camera application 112, the mobile phone 11 displays a video preview interface 114 of the camera application 112 in response to the tap operation. The video preview interface 114 includes a viewfinder frame, a control 115, and the like. The viewfinder frame displays a picture captured by a camera of the mobile phone 11.

After receiving a tap operation performed on the control 115, in response to the tap operation, the mobile phone 11 enters video recording, and displays a video recording interface 116. The video recording interface 116 includes a video picture being recorded and a control 117.

After receiving a tap operation performed on the control 117, in response to the tap operation, the mobile phone 11 exits the video recording, obtains a recorded video, displays a thumbnail 118 of the recorded video in the video preview interface, and updates the recorded video into the gallery application 113. A user may tap the thumbnail 118 to jump to the gallery application 113 to view the recorded video, or may tap the icon of the gallery application 113 to enter the gallery application 113 to view the recorded video.

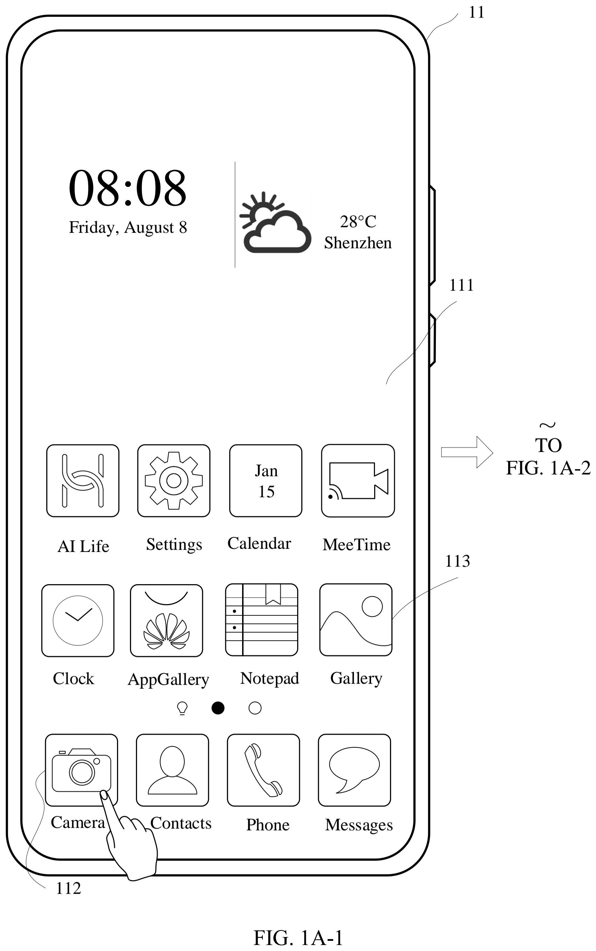

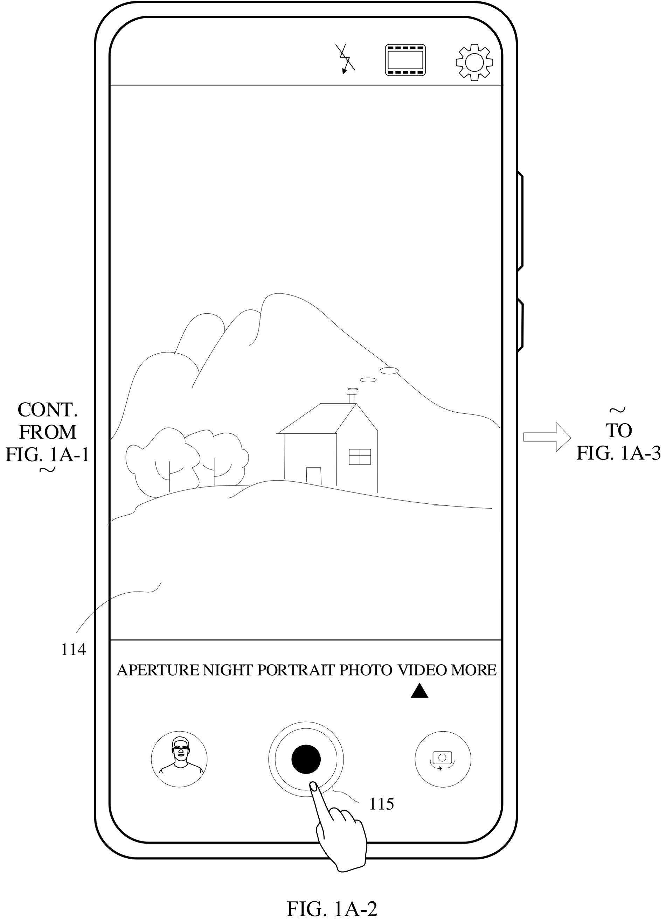

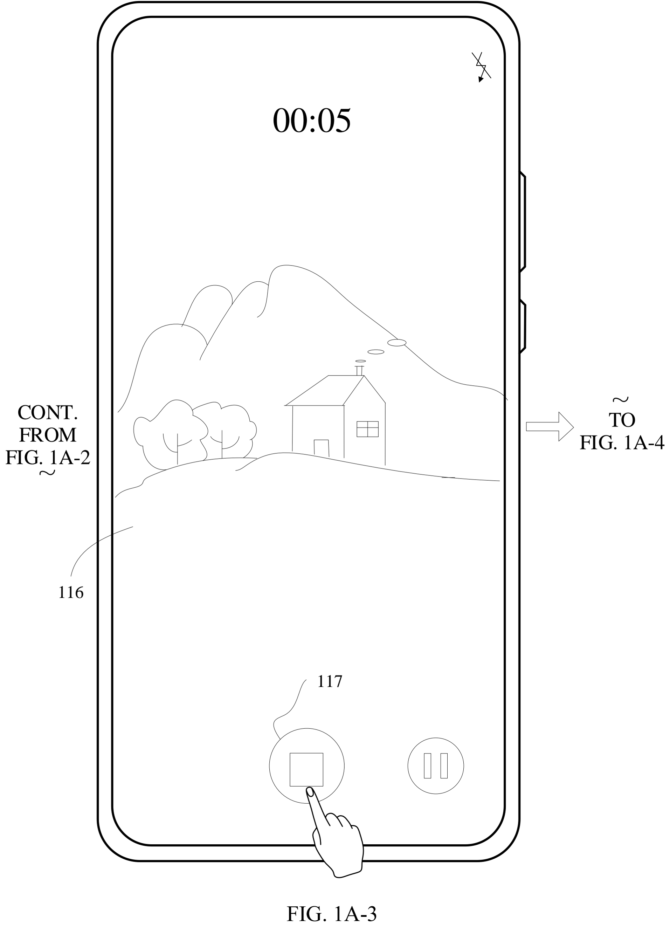

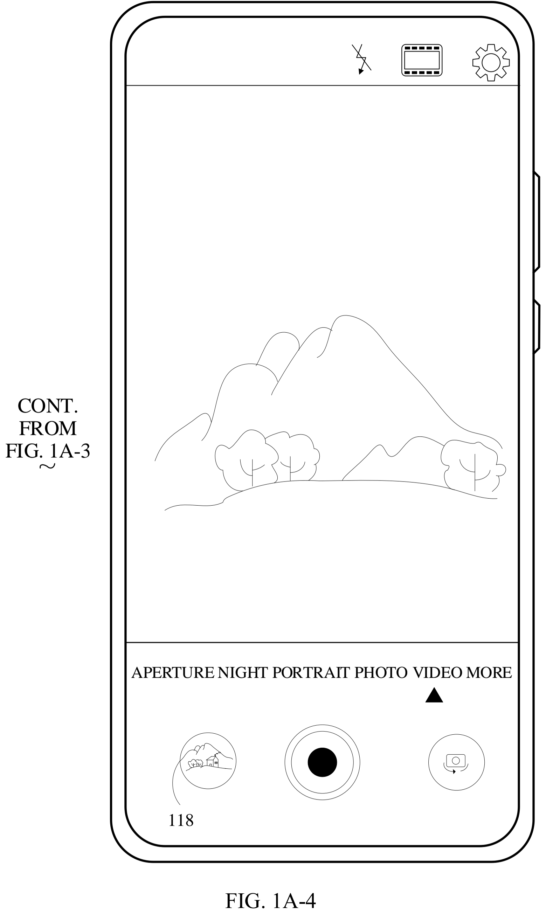

As shown in FIG. 1B, a video recording system framework includes an application layer, an intermediate layer, and a functional module layer. The application layer includes a camera application and a gallery application. The intermediate layer includes a camera service and a media library. The camera service includes a real-time video recording sub-service, and the real-time video recording sub-service includes a camera device, a camera stream, and the like. The real-time video recording sub-service is used to implement a video recording function. The media library includes a Media Store database interface and a Media Provider-DB (Media Provider database). The functional module layer includes a collection module, an algorithm processing module, a file system, and the like. The collection module is configured to collect image data. The algorithm processing module is configured to perform a plurality of algorithm processes to perform real-time online processing on the image data. The file system is configured to store a recorded video, and the recorded video is usually stored in a non-volatile storage medium, such as a read-only memory (Read-Only Memory, ROM).

In the scenario shown in FIG. 1A-1 to FIG. 1A-4, after the mobile phone 11 receives the tap operation performed on the control 115, the camera application initiates a video recording request to the camera service. In response to the video recording request, the camera service invokes the collection module to capture an image, to obtain to-be-processed image data, stores the to-be-processed image data in an image buffer (image buffer), and performs algorithm processing on the to-be-processed image data in real time by using the algorithm processing module. In an algorithm processing phase, a plurality of algorithm processes (process, proc) are sequentially performed on the to-be-processed image data, to obtain a video stream in real time, and the video stream is returned to the camera application by using the camera service.

After the mobile phone 11 receives the tap operation performed on the control 117, a video encoding module performs an operation such as packing and encoding on a video image output by the algorithm processing module, to obtain a recorded video when video recording ends, and updates the recorded video into the gallery application. The gallery application can access the recorded video in the file system through the media library. FIG. 1B shows an example in which the recorded video is a 100-point basic-quality video.

### 2. Video processing process

In a video recording scenario, an electronic device performs, by using an ISP chip, real-time online processing on an image captured by a camera, so that a recorded video can be obtained when video recording ends, thereby ensuring real-time video recording. A processing process of the ISP chip may include a process of the algorithm processing module in FIG. 1B.

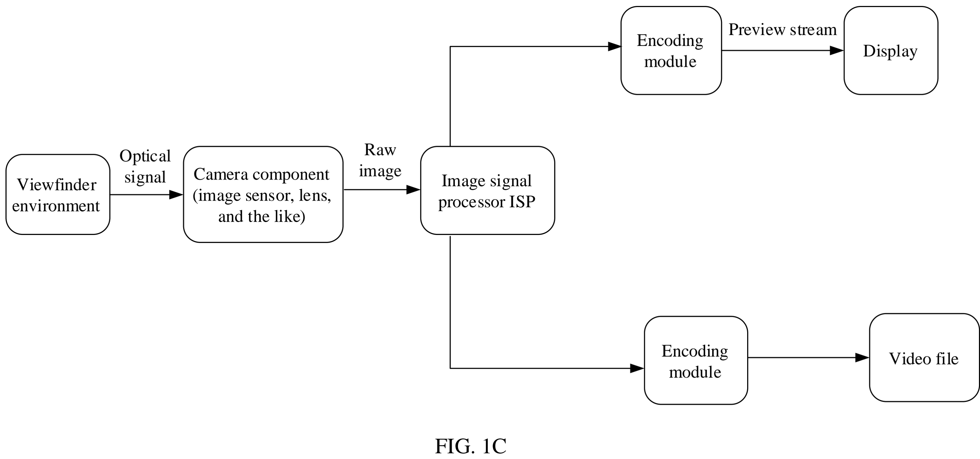

For example, FIG. 1C is a diagram of a video processing process according to an embodiment of this application. Based on the video recording scenario shown in FIG. 1A-1 to FIG. 1A-4, after capturing an optical signal in a viewfinder environment, a camera component such as a lens and an image sensor (Sensor) of the mobile phone 11 converts the optical signal into an electrical signal, and outputs a raw image (i.e., raw image data). The ISP chip performs a plurality of processing algorithms in series in real time, to process each frame of raw image online in real time, to obtain a processed image. The processed image output by the ISP chip may be divided into two data streams. One data stream is a preview video stream, and the other data stream is a recorded video stream. The preview video stream is a video stream displayed on a display of the electronic device in a video recording process, and the recorded video stream is a video stream that is stored in the electronic device after the video recording ends and that can be viewed by the user. As shown in FIG. 1B, after performing video encoding on the processed image output by the ISP chip, an encoding module obtains a preview video stream, and sends the preview video stream for display, to display a video picture on the display, for example, video pictures displayed in the video preview interface 114 and the video recording interface 116 in FIG. 1A-1 to FIG. 1A-4. In addition, another encoding module performs an operation such as video encoding on the processed image output by the ISP chip, to generate a video file, stores the video file in a storage medium, and updates the video file into the gallery application 113, so that the user can view the video file in the gallery application 113.

In a related technology, after the video file is updated into the gallery application 113, the gallery application 113 supports only operations such as viewing, editing, and sharing on the video file, and does not perform further processing on the video file. After the shot video is placed in the gallery application 113 for a period of time, video quality does not change.

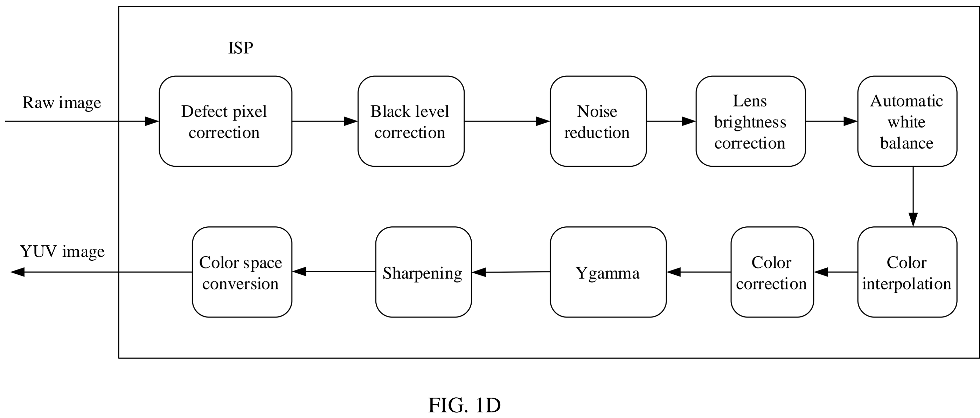

The ISP chip performs a plurality of processing algorithms in a pipeline manner to improve image effects such as details, colors, and brightness. For example, FIG. 1D is a diagram of an ISP chip processing process according to an embodiment of this application. After being input into the ISP, a raw image is sequentially processed by using processing algorithms such as defect pixel correction, black level correction, noise reduction, lens brightness correction, automatic white balance, color interpolation, color correction, Ygamma, sharpening, and color space conversion, to obtain a YUV image. After operations such as video encoding and packing are performed on the YUV image, a video file can be obtained.

It may be understood that the ISP chip may include more or fewer processing algorithms than those in FIG. 1D. For example, the ISP chip may further include an image stabilization algorithm, a beautification algorithm, and the like.

In a long-term research process, the inventor finds that video recording in a related technology cannot simultaneously balance real-time performance and video quality, and usually ensures real-time performance of video recording at the sacrifice of video quality.

Specifically, to ensure real-time performance of video recording, so that a user can obtain a recorded video when the video recording ends, processing duration of each frame of raw image is usually limited by real-time performance. Therefore, the ISP can run only a basic processing algorithm to process the raw image, and a requirement for real-time image output of a video is met at the sacrifice of an algorithm effect of each processing algorithm. In this case, although a real-time requirement of video recording can be met, video quality of an obtained video file is relatively poor. For example, in the scenario shown in FIG. 1A-1 to FIG. 1A-4, when the user taps the control 117 to end video recording, the mobile phone 11 needs to generate a video file in real time when the video recording ends, for the user to view. In this case, when the user records a video of 30 fps (Frame Per Second, quantity of frames transmitted per second in a picture), processing duration of each frame of raw image may be about 33 milliseconds. Within 33 milliseconds, a quantity and a type of image processing algorithms that can be performed by the ISP are limited, and algorithm effects of some image processing algorithms are sacrificed. As a result, an execution effect of the image processing algorithms is very limited, and video quality of a finally obtained video file is relatively poor.

For the related problem mentioned above, embodiments of this application provide a video processing solution. In a video recording process, an ISP chip processes raw image data in real time, to obtain a first video file in real time when video recording ends, thereby meeting a real-time requirement of video recording. After the video recording ends, a gallery application further processes the first video file based on metadata, to obtain a second video file with higher quality.

Different from the solution in which the ISP chip performs processing algorithms in series online in real time in a video recording process, in the video processing solution in embodiments of this application, not only the ISP chip performs processing algorithms in series online in real time in a video recording process, but also offline processing is further performed on a shot video file based on metadata in a gallery application after video recording ends, to obtain a video file with higher quality. In this way, a basic-quality video (i.e., the first video file) can be obtained when the video recording ends, so that a real-time requirement of video recording is met. After the video recording ends, offline processing is further performed on the shot basic-quality video in the gallery application based on the pre-collected metadata, to obtain a video with higher quality. Therefore, on the premise that the real-time requirement is met, the user can obtain the video with higher quality, so that user experience is improved.

The video processing solution provided in embodiments of this application may be applied to an electronic device. The electronic device may be, for example, a mobile phone or a tablet computer. A type of the electronic device is not limited herein.

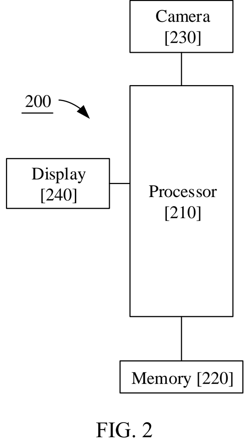

For example, refer to a diagram of a structure of an electronic device 200 shown in FIG. 2. The electronic device 200 may include but is not limited to a processor 210, a memory 220, a camera 230, a display 240, and the like.

It may be understood that the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware. For example, when the electronic device 200 is a mobile phone, the electronic device 200 may further include: a universal serial bus (universal serial bus, USB) interface, a charging management module, a sensor module, a power management module, a battery, an antenna, a mobile communication module, a wireless communication module, an audio module, a speaker, a receiver, a microphone, a headset jack, a button, a motor, an indicator, and a subscriber identity module (subscriber identity module, SIM) card interface. The sensor module may include at least one of the following: a pressure sensor, a gyro sensor, a barometric pressure sensor, a magnetic sensor, an acceleration sensor, a temperature sensor, a touch sensor, a distance sensor, an optical proximity sensor, a fingerprint sensor, an ambient light sensor, a bone conduction sensor, and the like.

The processor 210 may include one or more processing units. For example, the processor 210 may include an application processor (application processor, AP), a graphics processing unit (graphics processing unit, GPU), an ISP, a controller, a video codec, a digital signal processor (digital signal processor, DSP), and the like. Different processing units may be independent components, or may be integrated into one or more processors. The controller may generate an operation control signal based on instruction operation code and a time sequence signal, to complete control of instruction fetching and instruction execution. It may be understood that when a gallery application in embodiments of this application invokes metadata to further process a first video file, one or more processors such as the AP, the GPU, the ISP, and the DSP may be involved. In this case, the ISP performs offline processing.

In some embodiments, the processor 210 may include one or more interfaces. The interface may include an inter-integrated circuit (inter-integrated circuit, I2C) interface, a mobile industry processor interface (mobile industry processor interface, MIPI), a general-purpose input/output (general-purpose input/output, GPIO) interface, and the like.

The I2C interface is a two-way synchronous serial bus, and includes a serial data line (serial data line, SDA) and a serial clock line (serial clock line, SCL). In some embodiments, the processor 210 may include a plurality of groups of I2C buses. The processor 210 may be coupled to the camera 230 and the like through different I2C bus interfaces.

The MIPI interface may be configured to connect the processor 210 to a peripheral component such as the display 240 or the camera 230. The MIPI interface includes a camera serial interface (camera serial interface, CSI), a display serial interface (display serial interface, DSI), and the like. In some embodiments, the processor 210 and the camera 230 communicate with each other by using the CSI interface, to implement a photographing function of the electronic device 200. The processor 210 communicates with the display 240 by using the DSI interface, to implement a display function of the electronic device 200.

The GPIO interface may be configured by using software. The GPIO interface may be configured as a control signal, or may be configured as a data signal. In some embodiments, the GPIO interface may be configured to connect the processor 210 to the camera 230, the display 240, or the like. The GPIO interface may be further configured as an I2C interface, an MIPI interface, and the like.

It may be understood that the interface connection relationship between the modules shown in this embodiment of this application is merely an example, and does not constitute a limitation on the structure of the electronic device 200. In some other embodiments of this application, the electronic device 200 may alternatively use an interface connection manner different from that in the foregoing embodiment, or a combination of a plurality of interface connection manners.

The electronic device 200 implements a display function by using the GPU, the display 240, the application processor, and the like. The GPU is a microprocessor for image processing, and is connected to the display 240 and the application processor. The GPU is configured to perform mathematical and geometric calculation and render graphics. The processor 210 may include one or more GPUs that execute program instructions to generate or change display information.

The display 240 is configured to display an image, a video, and the like. The display 240 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 200 may include one or N displays 240, where N is a positive integer greater than 1.

The electronic device 200 may implement a photographing function by using the ISP, the camera 230, the video codec, the GPU, the display 240, the application processor, and the like.

The ISP is configured to process data fed back by the camera 230. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 230.

The camera 230 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device 200 may include one or N cameras 230, where N is a positive integer greater than 1.

The digital signal processor is configured to process a digital image signal.

The video codec is configured to compress or decompress a digital video. The electronic device 200 may support one or more types of video codecs. In this way, the electronic device 200 may play or record videos in a plurality of coding formats, for example, moving picture experts group (moving picture experts group, MPEG)-1, MPEG-2, MPEG-3, and MPEG-4.

The memory 220 may be configured to store computer executable program code, where the executable program code includes instructions. The memory 220 may include a program storage area and a data storage area. The program storage area may store an operating system, an application program required by at least one function (for example, a sound play function or an image play function), and the like. The data storage area may store data (such as audio data or a phone book) created in a use process of the electronic device 200. In addition, the memory 220 may include a high-speed random access memory, and may further include a non-volatile memory, such as at least one magnetic disk storage component, a flash memory component, and a universal flash storage (universal flash storage, UFS). The processor 210 performs various function applications and data processing of the electronic device 200 by running the instructions stored in the memory 220 and/or instructions stored in the memory disposed in the processor.

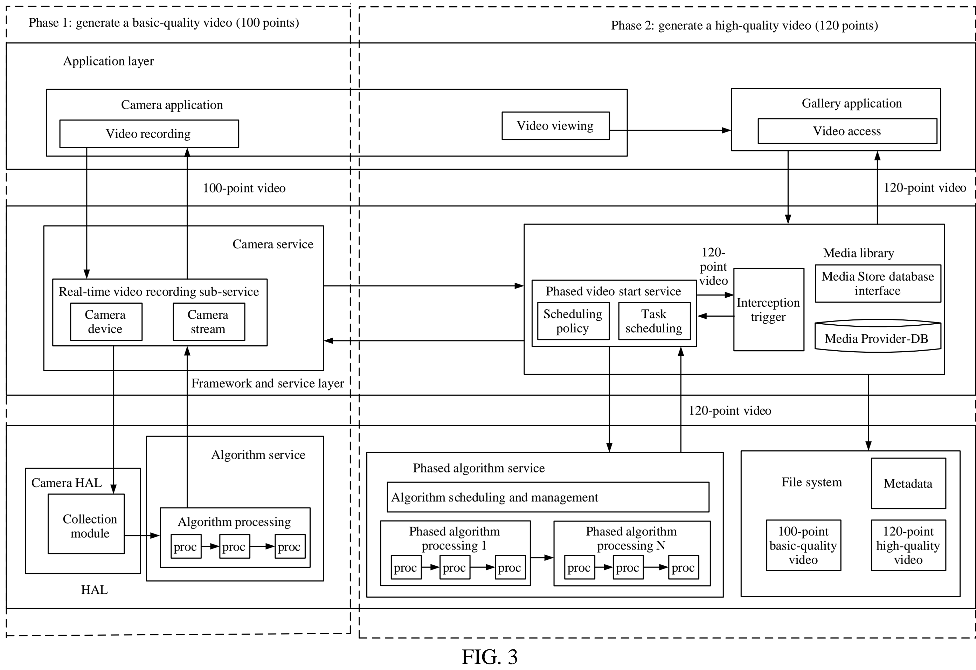

After the possible hardware architecture of the electronic device 200 in this embodiment of this application is described, the following describes, by using an example, a software system architecture of the electronic device 200 with reference to a block diagram of a video recording system architecture of the electronic device 200 shown in FIG. 3.

As shown in FIG. 3, the software system architecture of the electronic device 200 includes an application layer, a framework and service layer, and a hardware abstraction layer (Hardware abstraction layer, HAL).

The application layer includes a camera application, a gallery application, and the like. The camera application can implement a video recording function and a video viewing function. The gallery application can access a video and metadata (Metadata) in a file system through a media library.

The framework and service layer includes a camera service and the media library. The camera service includes a real-time video recording sub-service, and the real-time video recording sub-service may include a camera device, a camera stream, and the like. The media library includes modules such as a Media Store database interface, a Media Provider-DB, an interception trigger module, and a phased video start service. The phased video start service includes functional modules such as a scheduling policy and task scheduling. The phased video start service is configured to perform algorithm task scheduling according to the scheduling policy. The algorithm task may be each algorithm process (proc) in phased algorithm processing, and each algorithm process is scheduled according to the scheduling policy, to perform each algorithm process in sequence. The interception trigger module is configured to detect a trigger condition, and when the trigger condition is detected, trigger the phased start service to perform algorithm task scheduling, to schedule and perform a plurality of algorithm processes, so as to obtain a 120-point high-quality video. The trigger condition may be, for example, that a user taps a thumbnail of a video file, or a user views, shares, or edits a video file.

The HAL includes a camera HAL, an algorithm service, a phased algorithm service, and a file system. The camera HAL includes a collection module, and the collection module is configured to collect image data. The algorithm service is configured to perform a plurality of times of algorithm processing to process the image data online in real time, to obtain a 100-point basic-quality video. The phased algorithm service includes submodules such as algorithm scheduling and management, phased algorithm processing 1, and phased algorithm processing N. The algorithm scheduling and management are configured to schedule and manage each processing algorithm. The phased algorithm processing 1 and the phased algorithm processing N each include a plurality of algorithm processes (proc). The file system stores the metadata, the 100-point basic-quality video, and the 120-point high-quality video.

It should be noted that in the video recording system architecture shown in FIG. 3, for example, a video processing process is divided into two processes: a phase 1 and a phase 2. A basic-quality video is generated in the phase 1, and a high-quality video is generated in the phase 2. In addition, the phase 2 is further divided into a plurality of phased algorithm processing processes (for example, the phased algorithm processing 1 to N in FIG. 3). This is merely an example, and does not constitute a limitation on the technical solutions of this application. For example, in actual application, the phase 2 may not be divided into a plurality of phased algorithm processing processes.

Different from the system architecture in FIG. 1B, in the system architecture in FIG. 3, a related module for performing algorithm processing on a 100-point basic-quality video by the gallery application is added, for example, the interception trigger module and the phased algorithm processing 1 to N. For the user, video quality is improved after a shot video is stored in the gallery application for a period of time.

It may be understood that, after the 120-point high-quality video is obtained, the electronic device 200 may further delete the metadata and the 100-point basic-quality video stored in the file system, and change controls such as thumbnails that are originally associated with the 100-point basic-quality video to be associated with the 120-point high-quality video.

In addition, the 100-point basic-quality video and the 120-point high-quality video are merely for ease of description, to reflect that video quality in the phase 2 is higher than video quality in the phase 1, and do not impose a limitation on actual video quality of a video file shot in the phase 1 and a video file obtained in the phase 2.

With reference to the hardware system architecture and the software system architecture of the electronic device 200, the following further describes, by using an example, the video processing solution provided in embodiments of this application.

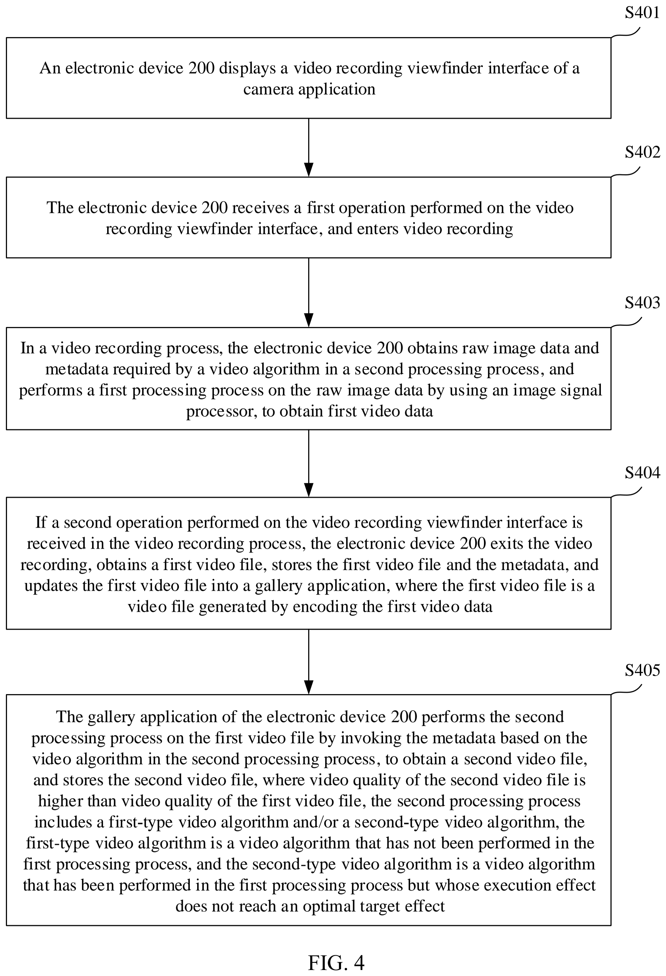

FIG. 4 is a block diagram of a procedure of a video processing method according to an embodiment of this application. The video processing method may include the following steps.

Step S401: The electronic device 200 displays a video recording viewfinder interface of a camera application.

It may be understood that, after receiving a tap operation performed on the camera application, the electronic device 200 may start the camera application in response to the tap operation, and display the video recording viewfinder interface of the camera application. In this case, the electronic device 200 is in a video preview state, and does not enter a video recording process.

For example, FIG. 5A-1 to FIG. 5A-5 are a diagram of a video recording process according to an embodiment of this application. A home screen 52 of a mobile phone 51 displays application icons such as a camera application 53, a gallery application 54, and a setting application. When the mobile phone 51 receives a tap operation performed on the camera application 53, the mobile phone 51 displays a video recording viewfinder interface 55 in response to the tap operation. A viewfinder frame of the video recording viewfinder interface 55 displays a preview video stream, and a video recording control 56 and a more control 57 are further included.

Step S402: The electronic device 200 receives a first operation performed on the video recording viewfinder interface, and enters video recording.

The first operation is an operation used to trigger the electronic device 200 to enter a video recording process, and may include one or more operations.

In some embodiments, the first operation is an operation on a video recording control, to trigger the electronic device 200 to enter a video recording process in a normal mode.

In some other embodiments, the first operation may include an operation on a video recording module control and an operation on a video recording control. The operation on the video recording module control is used to trigger the electronic device 200 to determine a target recording mode, and the operation on the video recording control is used to trigger the electronic device 200 to enter a video recording process in the target recording mode. The target recording mode is a specific video recording mode, which is different from a normal video recording mode. For example, the target recording mode may include but is not limited to a movie mode, a long-focus mode, a night motion mode, a slow motion mode, and the like.

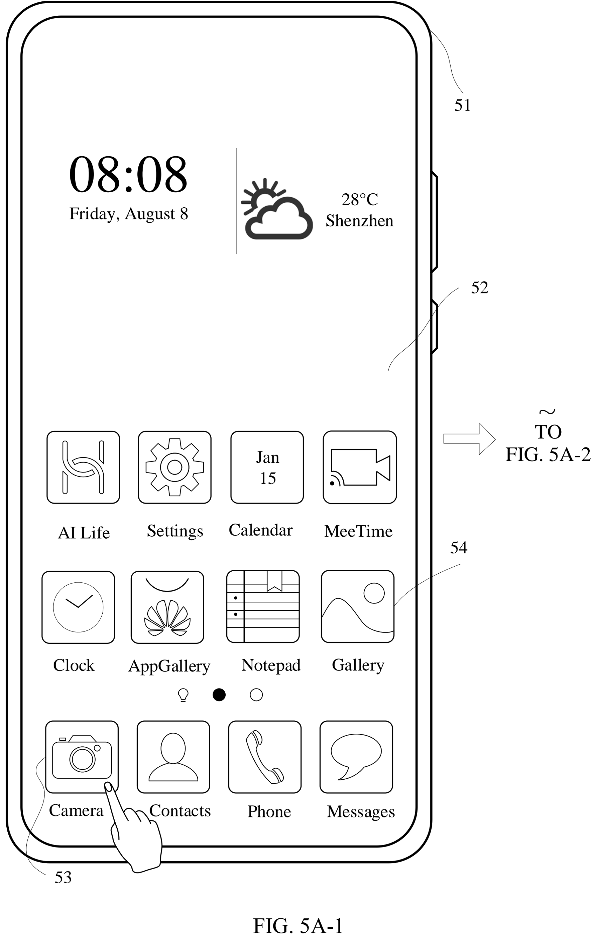

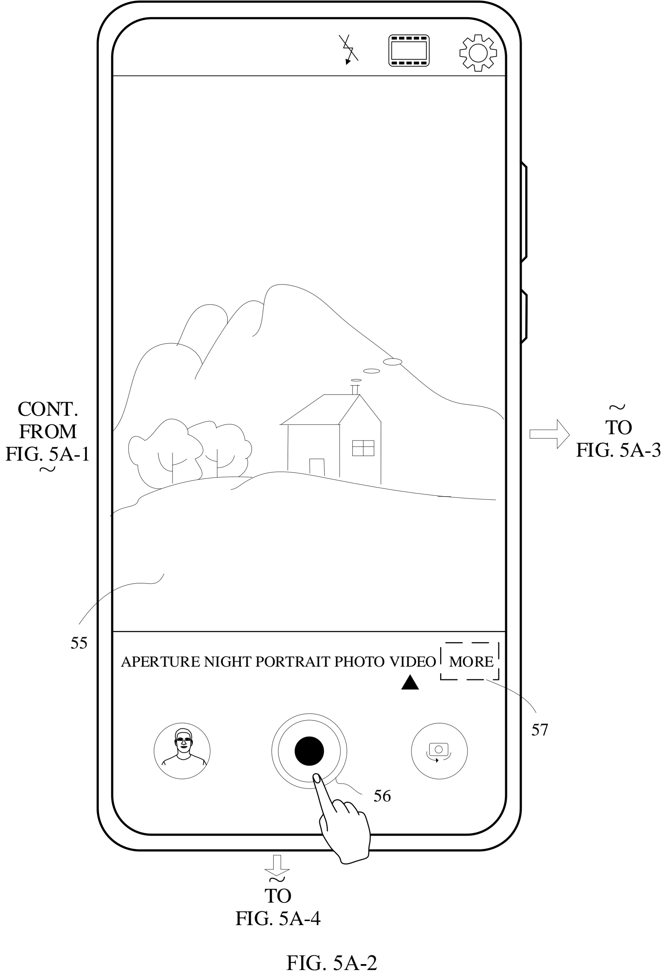

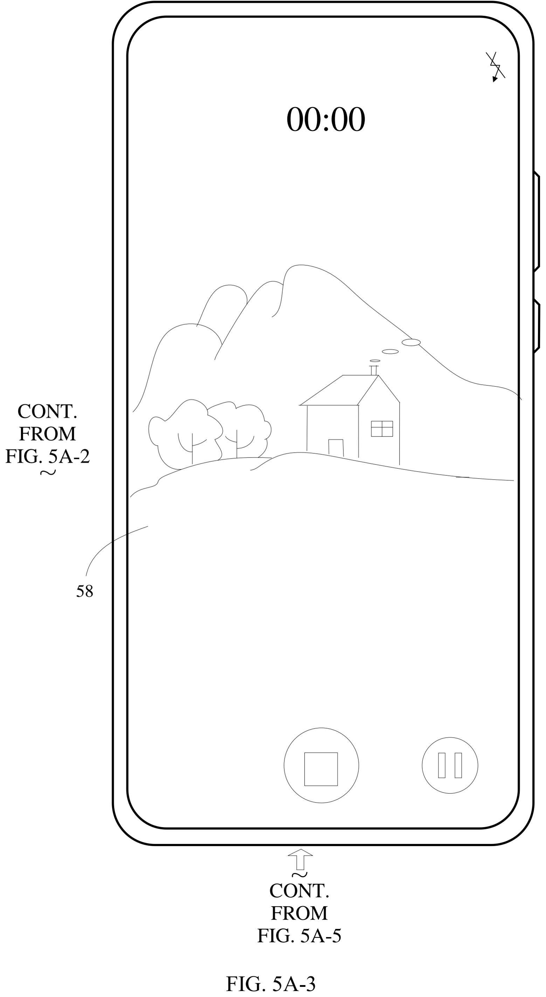

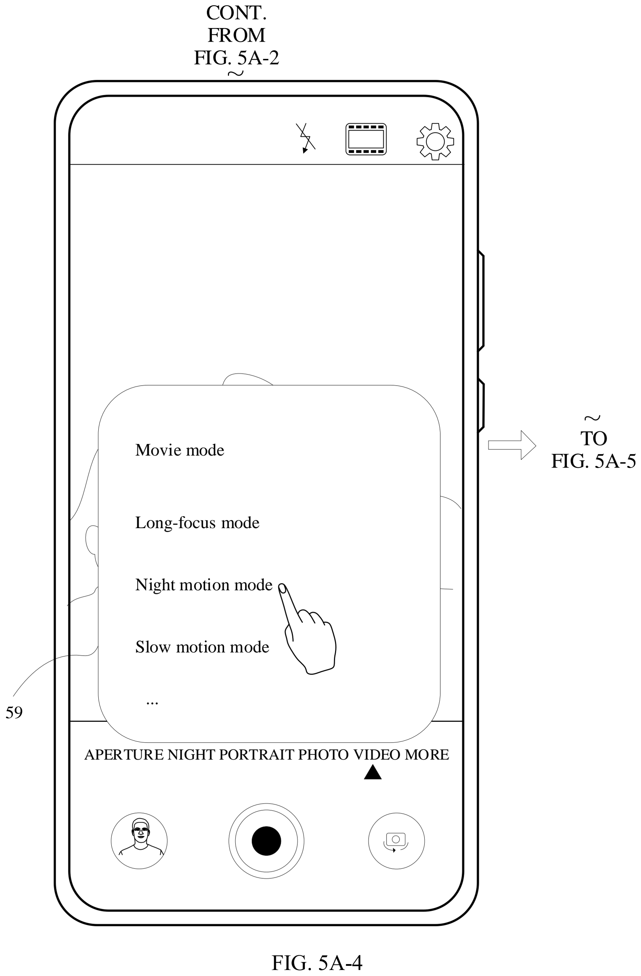

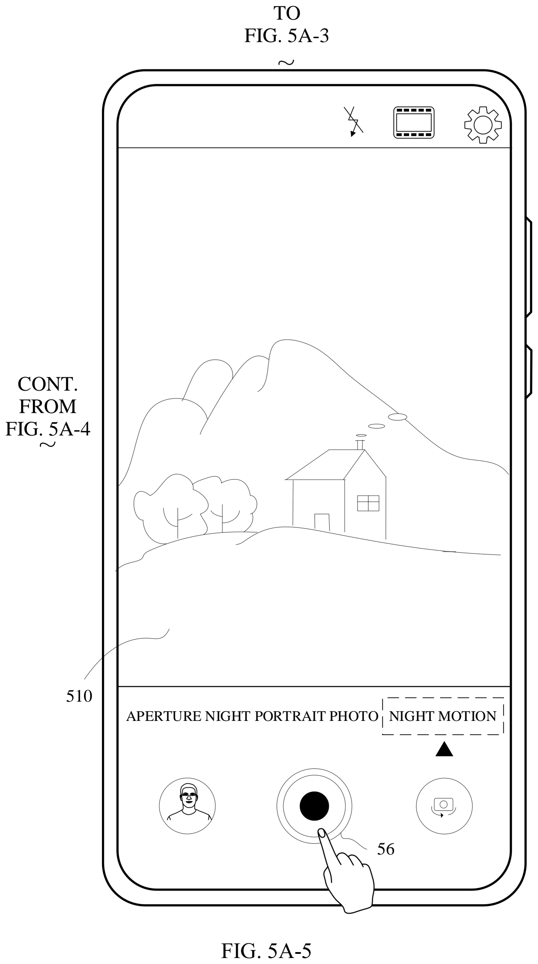

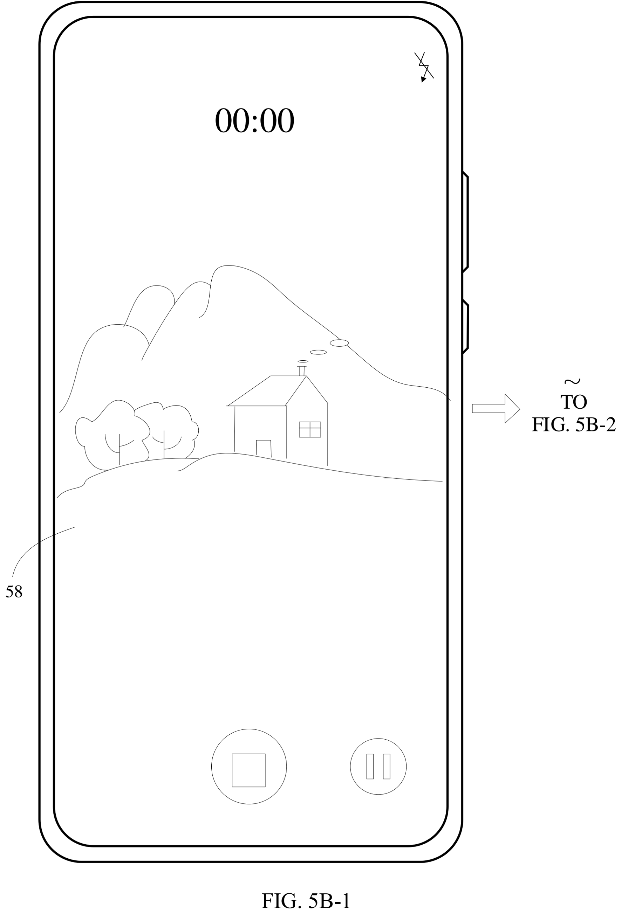

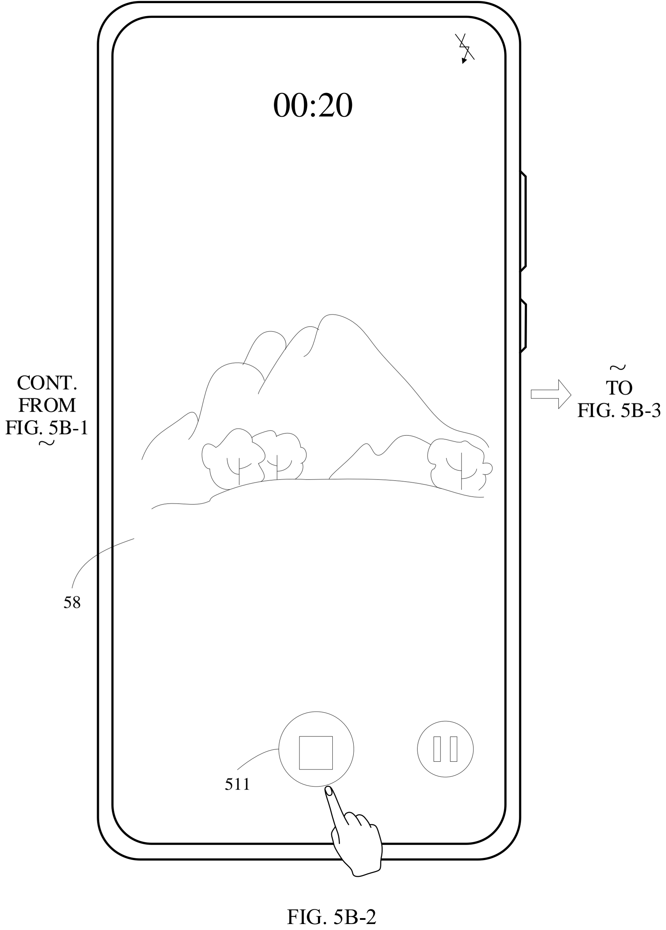

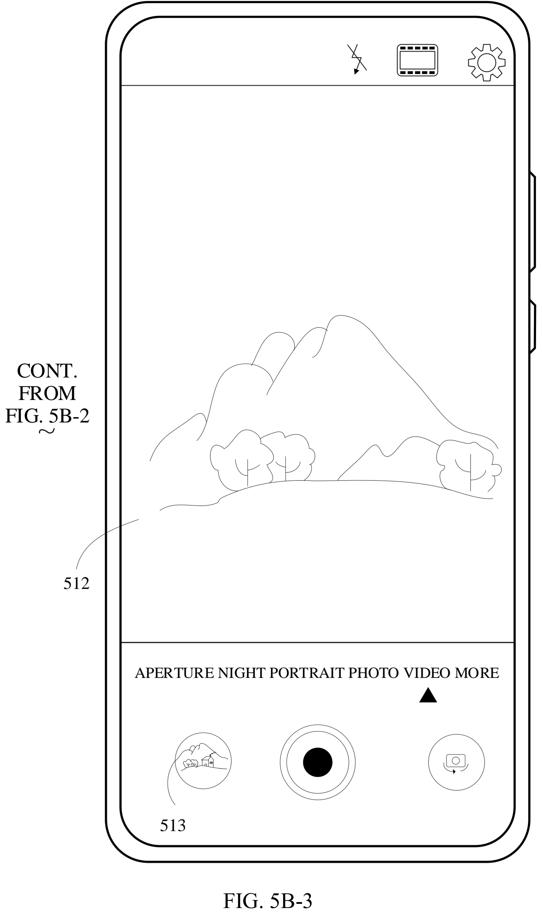

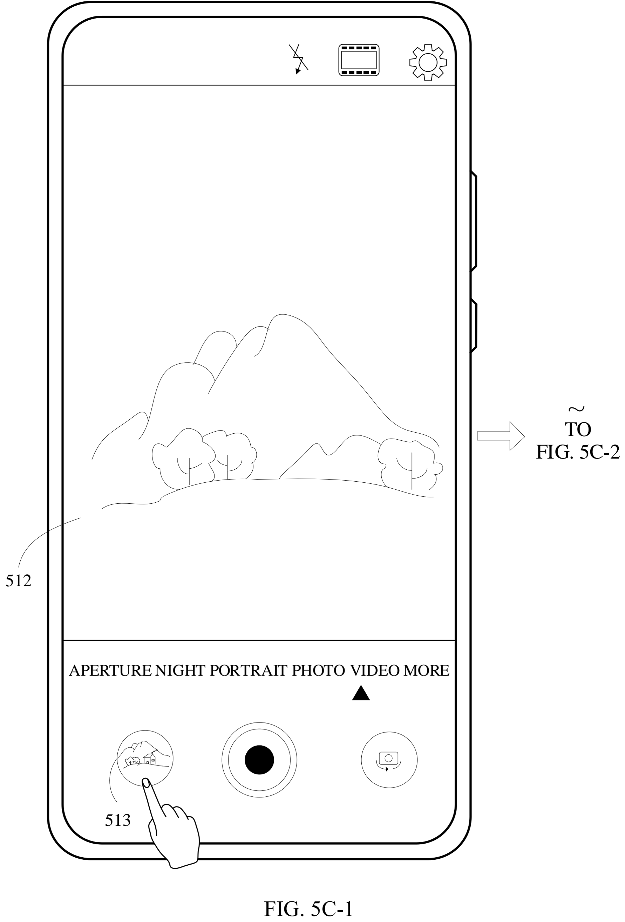

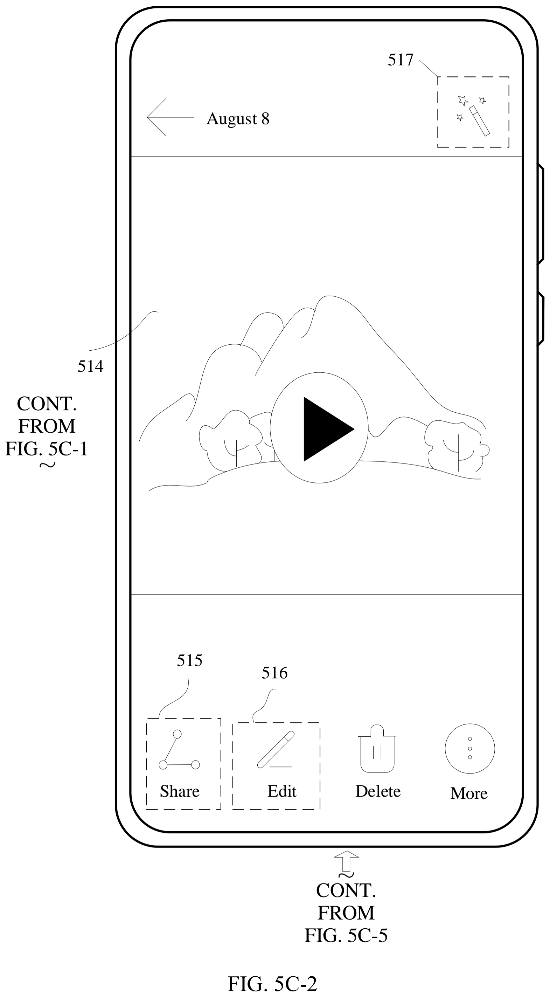

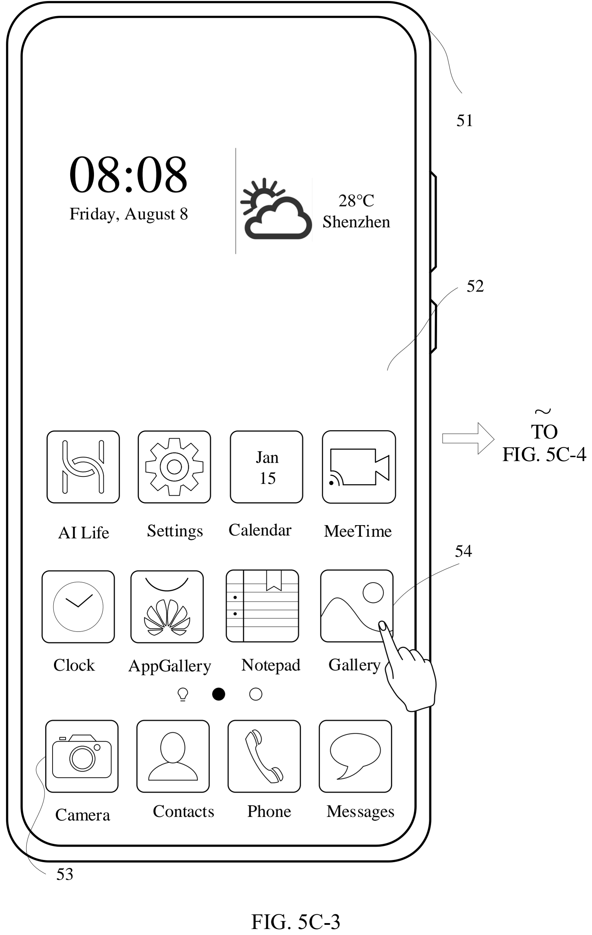

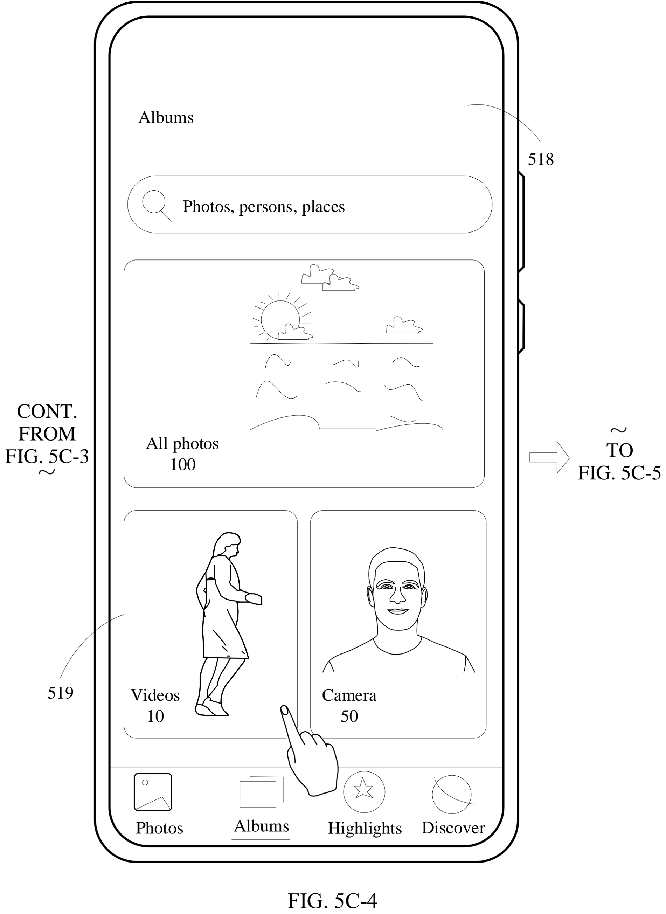

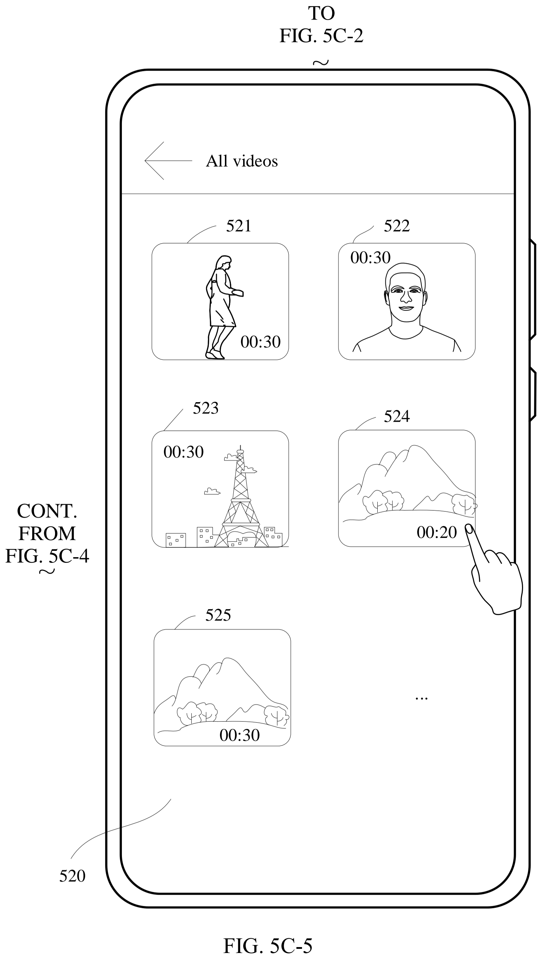

For example, as shown in FIG. 5A-1 to FIG. A-5, after the mobile phone 51 displays the video recording viewfinder interface 55, a user may tap the video recording control 56 to trigger the mobile phone 51 to enter a video recording process in a normal mode; or may tap the more control 57 to select a video recording mode to enter a video recording process in a specific video recording mode.

When the user taps the video recording control 56 in the video recording viewfinder interface 55, the mobile phone 51 enters video recording in response to a tap operation on the video recording control 56, and displays a video recording viewfinder interface 58 in a video recording state. In this case, the first operation is the tap operation on the video recording control 56.

When the user taps the more control 57 in the video recording viewfinder interface 55, the mobile phone 51 displays a window 59. The window 59 includes a plurality of video recording modes such as a movie mode, a long-focus mode, a night motion mode, and a slow motion mode. When the user taps a night motion mode control displayed in the window 59, the mobile phone 51 determines, in response to the tap operation, that the target recording mode is the night motion mode, and displays a video recording viewfinder interface 510 in a video preview state in the night motion mode. After receiving a tap operation on the video recording control 56 in the video recording viewfinder interface 510, the mobile phone 51 enters video recording in the night motion mode in response to the tap operation, and displays a video recording viewfinder interface 58 in a video recording state. In this case, the first operation may include the tap operation on the more control 57, the tap operation on the night motion mode in the window 59, the tap operation on the video recording control 56, and the like.

Step S403: In the video recording process, the electronic device 200 obtains raw image data and metadata required by a video algorithm in a second processing process, and performs a first processing process on the raw image data by using an image signal processor, to obtain first video data.

The raw image data (i.e., a raw image) is image data output by an image sensor (sensor). The output raw image may correspondingly vary with a pixel array of the image sensor. Generally, the pixel array of the image sensor is a Bayer array, and the raw image is usually a Bayer (Bayer) image.

It should be noted that, in the video recording process, in addition to collecting metadata (Mate data) such as 3A (automatic exposure control AE, automatic focus control AF, and automatic white balance AWB) information, image information (for example, an image width and height), and an exposure parameter (an aperture size, a shutter speed, and an f-number of light sensitivity), the electronic device 200 further collects, in a targeted manner, the metadata required when a gallery application performs the video algorithm in the second processing process subsequently.

Generally, when the electronic device 200 enters the video recording process in the specific video recording mode, the electronic device 200 may collect, in a targeted manner, metadata of a video algorithm corresponding to the specific video recording mode. Video algorithms that need to be performed in various specific video recording modes are preset, and an execution sequence of a plurality of video algorithms may also be preset. For example, video algorithms corresponding to the night motion mode include a noise reduction algorithm, an image stabilization algorithm, and a deblurring algorithm. In this case, when the electronic device 200 enters a video recording process in the night motion mode, metadata collected by the electronic device 200 includes gyro (Gyro) information and a low-fps raw image. The gyro information may be used for the deblurring algorithm and the image stabilization algorithm. The low-fps raw image may be used for the noise reduction algorithm. In this case, the algorithm in the second processing process includes a plurality of video algorithms corresponding to the specific video recording mode.

When the electronic device 200 enters a video recording process in a normal mode, the electronic device 200 may first perform scene recognition based on a raw image, and collect required metadata based on a recognized scene. For example, when recognizing, based on the raw image data, that a current scene is a night scene, the electronic device 200 may collect, in a targeted manner, metadata (for example, exposure data) required by the night scene.

It may be understood that, the video algorithm in the second processing process includes a plurality of video algorithms, but not all the video algorithms require metadata. In other words, in the second processing process, execution of some video algorithms needs to use metadata, and execution of some video algorithms does not need to use metadata. Therefore, during metadata collection, metadata required by a video algorithm is collected for the video algorithm that needs to use the metadata.

It may be understood that, after the electronic device 200 enters video recording, real-time online processing of a video ISP chip is performed on the raw image output by the image sensor, to obtain the first video data, in other words, the ISP performs the first processing process on the raw image, to obtain the first video data. The first processing process usually includes running a plurality of video algorithms in the video ISP chip, to process the raw image.

Step S404: If a second operation performed on the video recording viewfinder interface is received in the video recording process, the electronic device 200 exits the video recording, obtains a first video file, stores the first video file and the metadata, and updates the first video file into the gallery application, where the first video file is a video file generated by encoding the first video data.

The second operation is an operation used to trigger the electronic device 200 to exit the video recording, and the operation may include one or more operations.

For example, refer to a diagram of a video recording process shown in FIG. 5B-1 to FIG. 5B-3. Based on the scenario in FIG. 5A-1 to FIG. 5A-5, after the mobile phone 51 enters video recording and displays the video recording viewfinder interface 58 in the video recording state, the mobile phone 51 continuously performs video recording. In a continuous video recording process, when receiving a tap operation on a video recording control 511 in the video recording viewfinder interface 58, in response to the tap operation, the mobile phone 51 exits the video recording, generates the first video file, and stores the first video file and the metadata in a non-volatile storage medium. In this case, the second operation is the tap operation on the video recording control 511.

After the video ISP chip processes each frame of raw image online in real time to obtain first video data corresponding to each frame of raw image, the electronic device 200 may perform operations such as encoding and encapsulation on each piece of first video data, to generate the first video file when the video recording ends.

After the electronic device 200 updates the first video file into the gallery application, the gallery application displays a thumbnail of the first video file, and the user may tap the thumbnail of the first video file to perform operations such as viewing, playing, editing, and sharing on the first video file. Generally, the electronic device 200 may insert a file record of the first video file into a media library, and the gallery application may read the first video file from a file system based on the file record of the first video file, so that the first video file is updated into the gallery application.

Optionally, the electronic device 200 may further display the thumbnail of the first video file in the video recording viewfinder interface. For example, refer to FIG. 5B-1 to FIG. 5B-3. After receiving the tap operation performed on the video recording control 511, in response to the tap operation, the mobile phone 51 exits the video recording, displays a video recording viewfinder interface 512 in the video preview state, and displays a thumbnail 513 of the first video file in the video recording viewfinder interface 512. When the user taps the thumbnail 513 of the first video file, the electronic device 200 jumps from the camera application to the gallery application, and displays the first video file.

Refer to FIG. 2 and FIG. 3. The first video file may be a 100-point basic-quality video, and step S401 to step S404 may be a phase 1, in other words, a process of generating the basic-quality video. In the process of generating the basic-quality video, when the electronic device 200 receives the first operation, the camera application sends a video recording request to a real-time video recording sub-service in response to the first operation. In response to the video recording request, the real-time video recording sub-service invokes, by using a collection module of a camera HAL, the camera 230 to capture an image, to obtain a raw image output by the image sensor, and collects, in a targeted manner, metadata required by a video algorithm in a phase 2. The raw image output by the collection module is transmitted to an algorithm processing module of an algorithm service. The algorithm processing module sequentially performs a plurality of algorithm processes (i.e., video algorithms) on the raw image in real time, to obtain the first video data. When receiving the second operation, the electronic device 200 exits the video recording, performs an encoding operation on the first video data to generate the first video file (i.e., the 100-point basic-quality video), updates the 100-point basic-quality video into the gallery application through the media library, and stores the 100-point basic-quality video and the metadata in the file system. In this case, the phase 1 is completed, the 100-point basic-quality video is obtained, and the 100-point basic-quality video is updated into the gallery application.

It should be noted that, in the video recording process, the electronic device 200 performs online processing on the raw image in real time by using the video ISP chip, and may obtain the 100-point basic-quality video when the video recording ends, thereby meeting real-time performance of video recording.

In addition, compared with a case that no video file is generated when video recording ends, in this embodiment of this application, when the video recording ends, encoding and packing are performed based on a processing result of the first processing process, to generate the first video file. The first video file can be viewed by the user, so that a real-time requirement of video recording is met, and user experience is high.

Step S405: The gallery application of the electronic device 200 performs the second processing process on the first video file by invoking the metadata based on the video algorithm in the second processing process, to obtain a second video file, and stores the second video file, where video quality of the second video file is higher than video quality of the first video file.

The second processing process includes a first-type video algorithm and/or a second-type video algorithm, the first-type video algorithm is a video algorithm that has not been performed in the first processing process, and the second-type video algorithm is a video algorithm that has been performed in the first processing process but whose execution effect does not reach an optimal target effect.

After the electronic device 200 updates the first video file into the gallery application, the gallery application may directly perform further processing on the first video file. For example, when the camera application runs in the foreground, the gallery application performs the second processing process on the first video file in the background. Certainly, the gallery application may alternatively further process the first video file on an appropriate occasion. The appropriate occasion may mean that it is detected that the camera application is closed or the camera application runs in the background, or a third operation performed on a first thumbnail is received, or the camera application is closed or the camera application runs in the background, and a preset trigger condition is met. The first thumbnail is a thumbnail that is of the first video file and that is displayed in the video recording viewfinder interface after the second operation is received.

For example, refer to a diagram of a video operation shown in FIG. 5C-1 to FIG. 5C-5. Based on the scenario in FIG. 5B-1 to FIG. 5B-3, the mobile phone 51 exits the video recording, and displays the thumbnail 513 of the first video file in the viewfinder interface 512 in the video preview state. In this case, the camera application runs in the foreground, and the mobile phone 51 needs to perform processes such as image capturing and preview video stream processing. After receiving the tap operation on the thumbnail 513 of the first video file, the mobile phone jumps to a video viewing interface 514 of the gallery application. The video viewing interface 514 includes a share control 515, an edit control 516, a trigger control 517, and the like. In this case, the camera application runs in the background, the gallery application runs in the foreground, and the mobile phone 51 may not need to perform a process such as preview video stream processing. The first thumbnail is the thumbnail 513, and the third operation is the tap operation on the thumbnail 513.

Comparatively, when video recording ends but the camera runs in the foreground, the camera application still needs to occupy a computing resource, a memory resource, and the like, to perform processing processes such as image capturing and video stream previewing. In this case, if the gallery application performs a plurality of video algorithms in the second processing process to process the first video file, the plurality of video algorithms also need to occupy a computing resource, a memory resource, and the like. Therefore, load of the computing resource, the memory resource, and the like of the electronic device 200 may be relatively high, and a processor is in a high load state for a long time. As a result, the electronic device 200 encounters problems such as frame freezing, overheating, and high power consumption, affecting user experience.

After the video recording ends, the gallery application processes the first video file only after the camera application is closed, the camera application runs in the background, or the third operation performed on the first thumbnail is received. In this case, the electronic device does not need to perform processing processes such as image capturing and video stream previewing. Therefore, there is a relatively low probability that the electronic device 200 encounters problems such as frame freezing, overheating, and high power consumption, so that user experience is improved.

Further, when the camera application is closed or the camera application runs in the background, the electronic device 200 determines whether the preset trigger condition is detected; and if the preset trigger condition is detected, triggers the gallery application to invoke the metadata to process the first video file, to obtain the second video file; or if the preset trigger condition is not detected, continues to determine whether the preset trigger condition is detected.

The preset trigger condition includes any one of the following: a fourth operation performed on a second thumbnail or a trigger control, an operation of starting the gallery application, an operation of viewing or playing the first video file, an operation of sharing the first video file, or an operation of editing the first video file is received, a system of the electronic device is in an idle state, and a screen of the electronic device is turned off or enters sleep mode.

The trigger control is a control that is displayed in the gallery application and that is used to trigger video algorithm processing on the first video file. For example, refer to FIG. 5C-1 to FIG. 5C-5. The video viewing interface 514 of the mobile phone 51 includes the trigger control 517. When receiving a tap operation (i.e., the fourth operation) performed on the trigger control 517, the mobile phone 51 considers that the preset trigger condition is detected, and triggers the gallery application to further process the first video file.

The second thumbnail is a thumbnail that is of the first video file and that is displayed in the gallery application. For example, refer to FIG. 5C-1 to FIG. 5C-5 again. After receiving a tap operation performed on the gallery application 54, the mobile phone 51 displays an album interface in response to the tap operation, where the album interface includes a video album control 519. After receiving a tap operation performed on the video album control 519, the mobile phone 51 displays a video album interface 520. The video album interface 520 includes a thumbnail of each video. FIG. 5C-1 to FIG. 5C-5 show an example of a thumbnail 521 to a thumbnail 525. The thumbnail 524 is the thumbnail of the first video file, in other words, the second thumbnail. After receiving a tap operation (i.e., the fourth operation) performed on the thumbnail 524, the mobile phone 51 displays the video viewing interface 514, considers that the preset trigger condition is detected, and triggers the gallery application to process the first video file.

Refer to FIG. 5C-1 to FIG. 5C-5 again. The operation of starting the gallery application is a tap operation on the gallery application 54; the operation of viewing or playing the first video file is an operation of tapping the first video file displayed in the video viewing interface 514; the operation of sharing the first video file is a tap operation on the share control 515 in the video viewing interface 514; and the operation of editing the first video file is a tap operation on the edit control 516 in the video viewing interface 514.

The system of the electronic device 200 being in the idle state may mean that load of the processor is less than a preset load threshold, and a running memory is greater than a preset memory threshold. Generally, when the user does not use the electronic device 200, no application runs in the foreground of the electronic device 200, and no application is resident in the background, it may be considered that the electronic device is in an idle state. This may be specifically determined by using the load of the processor, the running memory, a device temperature, and the like.

Certainly, the preset trigger condition is not limited to those mentioned above. For example, the preset trigger condition may alternatively include: The first video file is uploaded to a cloud, or load of the processor of the electronic device 200 is less than a preset load threshold, a running memory is greater than a preset memory threshold, and a device temperature is less than a preset temperature threshold.

It should be noted that, when the camera application runs in the background or is closed, whether the preset trigger condition is met is further determined, and only when the preset trigger condition is met, the gallery application further processes the first video file. In this way, when the user needs to perform an operation such as viewing, editing, or sharing on a shot video, the gallery application can process the first video file in a timely manner, so that the user can obtain a video with higher quality in a timely manner. In addition, the gallery application may further process the first video file when the system is idle, the screen is turned off, or the screen enters sleep mode, so that problems such as device freezing and device overheating can be further alleviated.

Generally, after the first video file is obtained through shooting, if the user needs to perform an operation (for example, editing, viewing, sharing, or uploading to a third-party platform) on the first video file, the electronic device 200 may trigger the gallery application in a timely manner to further process the first video file, so as to obtain the second video file with higher quality in a timely manner. If the user does not need to perform an operation on the first video file, only when the system is idle or total system load is relatively low, the electronic device 200 may trigger the gallery application to further process the first video file, so as to alleviate device freezing and device overheating, and reduce device power consumption.

In a process in which the gallery application invokes the metadata to process the first video file, a plurality of video algorithms usually need to be performed. In other words, the second processing process may include a plurality of video algorithms. The plurality of video algorithms may be divided into a plurality of phases, and each phase includes one or more video algorithms. For example, refer to FIG. 3. The phased algorithm service includes the phased algorithm processing 1 to the phased algorithm processing N, and each phased algorithm processing includes a plurality of procs (i.e., video algorithms).

The second video file may be a 120-point basic-quality video in FIG. 3, and step S405 may be a phase 2, in other words, a process of generating the high-quality video. In the process of generating the high-quality video, when an interception trigger module detects a trigger condition (for example, when a video file is viewed, shared, or edited), a phased video start service is triggered to start phased algorithm processing. The phased video start service performs task scheduling on an algorithm processing process in the phase 2, and after determining a scheduling policy based on a system status, performs each phased algorithm processing in the phase 2 by using the determined scheduling policy. After the plurality of video algorithms are performed, processed video data may be encoded and packed to obtain the 120-point high-quality video (i.e., the second video file), the 120-point high-quality video (i.e., the second video file) is updated into the gallery application through the media library, and the 120-point high-quality video (i.e., the second video file) is stored in the file system. Quality of the 120-point high-quality video is higher than quality of the 100-point basic-quality video.

It should be noted that when the second video file is stored, the original first video file in the storage medium may be replaced with the second video file; or the second video file may be directly stored in the storage medium, and both the first video file and the second video file are in the storage medium, but are stored at different locations.

It should be noted that, in this embodiment of this application, the 100-point basic-quality video is generated in real time in the phase 1, to meet the real-time requirement of video recording. Further, the 120-point high-quality video is generated in the phase 2, so that the user can obtain a video file with higher quality while the real-time requirement is met. It may be understood that, the phase 1 has a high real-time requirement, and therefore, the video ISP chip usually performs only a basic processing algorithm, and a requirement for real-time image output of a video is met at the sacrifice of an algorithm execution effect, so as to obtain the 100-point basic-quality video. The second processing process (phase 2) has a relatively low real-time requirement, a plurality of video algorithms may be further run, and an execution effect of the video algorithms can reach an optimal target effect, so as to improve video quality of the 100-point basic-quality video.

In this embodiment of this application, in the video recording process, the metadata subsequently required by the gallery application is pre-collected, and the raw image data is processed in real time by using the ISP, so that the basic-quality video (i.e., the first video file) can be obtained when the video recording ends, and the real-time requirement is met. After the first video file is updated into the gallery application, the shot basic-quality video is further processed in the gallery application based on the pre-collected metadata, to obtain a video with higher quality. Therefore, on the premise that the real-time requirement is met, the user can obtain the video with higher quality, so that user experience is improved.

Based on the foregoing embodiment, the video processing process may be divided into two phases. A first phase is a process of generating the first video file, and a second phase is a process of generating the second video file based on the first video file. In the first phase, the video ISP chip performs a plurality of video algorithms online in real time. In the second phase, the gallery application performs a plurality of video algorithms offline. The following provides descriptions with reference to a block diagram of another procedure of a video processing method shown in FIG. 6. As shown in FIG. 6, the video processing method may include the following steps.

Step S601: The electronic device 200 displays a video recording viewfinder interface of a camera application.

Step S602: The electronic device 200 receives a first operation performed on the video recording viewfinder interface, and enters video recording.

Step S603: In a video recording process, the electronic device 200 obtains raw image data and metadata required by a video algorithm in a second processing process, and performs a first processing process on the raw image data by using an image signal processor, to obtain first video data, where the first processing process includes a plurality of video algorithms.

The first processing process may be a plurality of procs (algorithm processes) performed by the algorithm processing module in FIG. 3, is real-time online processing at a video ISP chip end, and has a relatively strong real-time constraint. To meet the real-time constraint, a quantity of video algorithms that can be performed in the first processing process and even an execution effect of the video algorithms are subject to the real-time constraint. Therefore, the plurality of video algorithms performed in the first processing process are usually relatively basic video algorithms, for example, a noise reduction algorithm and a sharpening algorithm.

In this embodiment of this application, the first processing process performed at the video ISP chip end may be the same as the algorithm processing shown in FIG. 1B. In other words, the video algorithms originally performed in the algorithm process in FIG. 1B may not be reduced in the first processing process in this embodiment of this application. A reason is that reducing the video algorithms performed in the first processing process lowers video quality of a first video file, affecting user experience.

Step S604: If a second operation performed on the video recording viewfinder interface is received in the video recording process, the electronic device 200 exits the video recording, obtains a first video file, stores the first video file and the metadata, and updates the first video file into a gallery application, where the first video file is a video file generated by encoding the first video data.

It should be noted that, compared with a case that no video file is generated when video recording ends, in this embodiment of this application, when the video recording ends, encoding and packing are performed based on a processing result of the first processing process, to generate the first video file. The first video file can be viewed by the user, so that a real-time requirement of video recording is met, and user experience is high.

Step S605: When the electronic device 200 detects that the camera application is closed or the camera application runs in a background, or a third operation performed on a first thumbnail is received, or the camera application is closed or the camera application runs in the background, and a preset trigger condition is met, the gallery application performs the second processing process on the first video file by invoking the metadata based on the video algorithm in the second processing process, to obtain a second video file, and stores the second video file, where the second processing process includes a first-type video algorithm and/or a second-type video algorithm, the first-type video algorithm is a video algorithm that has not been performed in the first processing process, the second-type video algorithm is a video algorithm that has been performed in the first processing process but whose execution effect does not reach an optimal target effect, and video quality of the second video file is higher than video quality of the first video file.

It may be understood that the metadata includes data required by a plurality of video algorithms. When the metadata is invoked to perform the second processing process on the first video file, if a video algorithm needs to use metadata, the metadata required by the video algorithm is invoked to perform video algorithm processing, or if a video algorithm does not need to use metadata, the metadata does not need to be invoked when the video algorithm is performed.

As described above, when a video algorithm is performed in the first processing process, due to a strong real-time constraint, an execution effect of some video algorithms cannot be optimal, and a quantity of video algorithms that can be performed is very limited. Consequently, quality of the first video file is relatively poor. To improve quality of a video shot by the user while a real-time requirement is met, the gallery application performs the second processing process offline. A real-time constraint of the second processing process is usually weak. The second processing process may include a video algorithm that has been performed in the first processing process but whose execution effect does not reach a target effect, in other words, the second-type video algorithm, and may also include a video algorithm that has not been performed in the first processing process, in other words, the first-type video algorithm. Both the first-type video algorithm and the second-type video algorithm can improve video quality.

For example, the first processing process may include algorithms such as defect pixel correction, black level correction, noise reduction, lens brightness correction, automatic white balance, color interpolation, color correction, Ygamma, sharpening, and color space conversion; and the second processing process may include algorithms such as image stabilization, noise reduction, and deblurring. In this case, the image stabilization algorithm and the deblurring algorithm are first-type video algorithms, and noise reduction is a second-type video algorithm.

The optimal target effect is a desired video picture effect. Using the noise reduction algorithm as an example, the optimal target effect may mean that a video picture has less noise and rich image details. When the noise reduction algorithm is performed in the first processing process, due to the real-time constraint, usually only some noise in an image is removed, but a large quantity of image details lost due to noise removal are not restored. Consequently, image details of an obtained video picture are deficient. When the noise reduction algorithm is performed in the second processing process, not only remaining noise in the image can be removed, but also the image details lost during noise removal can be restored, thereby achieving the optimal target effect of less noise and rich image details of the video picture, and improving video picture quality.

It should be noted that, in this embodiment of this application, a video algorithm that originally belongs to the first processing process is not performed in the subsequent second processing process, but the video algorithms in the first processing process are not reduced, and a required video algorithm is further performed in the second processing process, to improve video quality.

Certainly, in some other embodiments, the video algorithms performed in the first processing process may be appropriately reduced, and a reduced video algorithm is performed in the second processing process. However, in this case, the video algorithm that originally belongs to the first processing process is not simply performed in the second processing process, but a video algorithm that has not been performed in the first processing process or whose execution effect is not optimal is further performed in the second processing process, to improve video quality.

Refer to FIG. 3. The first processing process may be a plurality of procs performed by the algorithm processing module in a phase 1, and the second processing process may be phased algorithm processing 1 to N in a phased algorithm service in a phase 2.

It can be learned from the foregoing that, in this embodiment of this application, in the video recording process, the camera application performs the first processing process online in real time by using the video ISP chip, to obtain a basic-quality video. After the video recording ends, the gallery application performs the second processing process offline. The second processing process may include a video algorithm that has not been performed in the first processing process, and a video algorithm that has been performed in the first processing process but whose execution effect does not reach an optimal target effect due to real-time performance or the like, so that the user can obtain a video with higher quality on the premise that the real-time requirement is met.

Based on the foregoing embodiment, the electronic device 200 may enter a video recording process in a normal mode, or may enter a video recording process in a specific video recording mode. The following describes the video processing process in the specific video recording mode with reference to a block diagram of another procedure of a video processing method according to an embodiment of this application shown in FIG. 7. As shown in FIG. 7, the video processing process may include the following steps.

Step S701: The electronic device 200 displays a video recording viewfinder interface of a camera application.

Step S702: The electronic device 200 receives an operation performed on the video recording viewfinder interface, and enters video recording in a target recording mode.

It may be understood that the operation performed on the video recording viewfinder interface includes one or more operations, and is used to trigger the electronic device 200 to enter the video recording process in the target recording mode.

The operation performed on the video recording viewfinder interface may include an operation performed on a video recording mode control in the video recording viewfinder interface and an operation performed on a recording control in the video recording viewfinder interface. The operation performed on the video recording mode control in the video recording viewfinder interface is used to trigger the electronic device 200 to determine that a video recording mode is the target recording mode, and the operation performed on the recording control in the video recording viewfinder interface is used to trigger the electronic device 200 to enter video recording in the target recording mode. For example, refer to FIG. 5A-1 to FIG. 5A-5. A user may select a plurality of video recording modes displayed in the window 59, and then tap the video recording control 56 to enter a video recording process in a night motion mode.

The target recording mode is a video recording mode that is different from a normal mode. For example, the target recording mode may include a movie mode, a long-focus mode, a night motion mode, a slow motion mode, and the like.

Step S703: In a video recording process, the electronic device 200 obtains raw image data and metadata required by a plurality of target video algorithms corresponding to the target recording mode, and performs a first processing process on the raw image data by using an image signal processor, to obtain first video data, where the plurality of target video algorithms are video algorithms corresponding to the target recording mode.

It should be noted that, for each target recording mode, a target video algorithm that needs to be performed by a gallery application may be preset, in other words, a video algorithm that needs to be performed in a second processing process in each target recording mode may be preset. In addition, an execution sequence of the plurality of target video algorithms corresponding to the target recording mode may also be preset.

For example, for the night motion mode, video tasks such as noise, image details, motion blurring, and image stabilization are key to video quality. Therefore, target video algorithms corresponding to the night motion mode are set to include deblurring, image stabilization, and noise reduction, and an algorithm execution sequence is sequentially image stabilization, noise reduction, and deblurring.

After entering the video recording process in the target recording mode, the electronic device 200 may collect, in a targeted manner, metadata required by the target video algorithm corresponding to the target recording mode, and store the metadata in a non-volatile storage medium. In this way, when further processing a first video file, the gallery application may invoke the metadata of the target video algorithm, and perform the target video algorithm based on the metadata.

It may be understood that some target video algorithms need to use metadata, and some target video algorithms do not need to use metadata. Therefore, when the metadata is collected, for target video algorithms that need to use metadata, the metadata required by these target video algorithms is collected; and when the target video algorithms are performed, for the target video algorithms that need to use the metadata, the metadata pre-collected for the target video algorithms is invoked to perform video algorithm processing.

Step S704: If a second operation performed on the video recording viewfinder interface is received in the video recording process, the electronic device 200 exits the video recording, obtains a first video file, stores the first video file and the metadata, and updates the first video file into the gallery application, where the first video file is a video file generated by encoding the first video data.

Step S705: The gallery application of the electronic device 200 invokes, based on the target video algorithms corresponding to the target recording mode, the metadata required by the target video algorithms, sequentially performs the target video algorithms according to an algorithm execution sequence of the target video algorithms, to perform a second processing process on the first video file to obtain a second video file, and stores the second video file, where video quality of the second video file is higher than video quality of the first video file.

It may be understood that, in the second processing process, the gallery application sequentially performs the plurality of target video algorithms on the first video file according to the algorithm execution sequence. In this case, the second processing process includes the plurality of target video algorithms, and the target video algorithm may be a first-type video algorithm, or may be a second-type video algorithm.

For example, for the night motion mode, target video algorithms that need to be performed in the second processing process include deblurring, image stabilization, and noise reduction. Deblurring and image stabilization are first-type video algorithms, and noise reduction is a second-type video algorithm.

Optionally, the electronic device 200 may trigger, only on an appropriate occasion, the gallery application to perform the second processing process, to invoke the metadata required by the target video algorithms, and sequentially perform the target video algorithms, to obtain the second video file with higher quality.

The appropriate occasion may mean that it is detected that the camera application is closed or the camera application runs in the background, or a third operation performed on a first thumbnail is received, or the camera application is closed or the camera application runs in the background, and a preset trigger condition is met. For specific descriptions, refer to the foregoing corresponding content. Details are not described herein again.

It should be noted that, based on a phased video processing architecture, this embodiment of this application not only can enrich video recording modes, but also can balance video quality and a real-time requirement for a video obtained in the target recording mode, so that the user can obtain a video with higher quality and richer video recording modes, thereby improving user experience.

Specifically, the phased video processing architecture may include a first phase and a second phase. The first phase is a process of performing real-time online processing on a raw image in a video ISP chip to generate the first video file in real time. The second phase may be a process of processing the first video file in the gallery application to generate the second video file. For example, refer to the phase 1 and the phase 2 in FIG. 3.

Compared with a normal video recording mode, the specific video recording mode usually needs execution of more video algorithms to achieve a video effect of the specific video recording mode. For example, compared with the normal recording mode, the night motion mode may need execution of additional algorithms such as image stabilization, deblurring, and noise reduction.

When the specific video recording mode is implemented by using a single-phase video processing architecture (for example, the system architecture shown in FIG. 1B), the single-phase video processing architecture has only the first phase, and the video ISP chip needs to process the raw image online in real time. However, because more video algorithms need to be performed in the specific video recording mode, when the video ISP chip performs real-time online processing, algorithm processing duration of each frame of raw image is longer, and a real-time constraint for video recording cannot be met. In this case, when the video recording ends, the user may not be able to obtain a shot video in real time, and the real-time requirement for video recording cannot be met. Even when the user ends the video recording, the electronic device 200 may encounter a phenomenon such as frame freezing.

In addition, when the specific video recording mode is implemented by using the single-phase video processing architecture, if meeting the real-time constraint is preferentially considered, when the video ISP performs a video algorithm, a requirement for real-time image output of a video is met at the sacrifice of an algorithm execution effect, resulting in a poor algorithm execution effect of the video ISP chip. In this case, although the real-time constraint can be met, video quality is reduced, and quality of the video shot by the user is relatively poor.

Therefore, the single-phase video processing architecture usually cannot implement rich video recording modes, and cannot balance real-time performance and video quality. In a related technology, to prevent the user from feeling a phenomenon such as frame freezing, a real-time constraint for a video is preferentially considered, and an algorithm effect of a video algorithm is sacrificed. In this case, although rich video recording modes can be implemented, and the real-time constraint for the video can be met, quality of a shot video is relatively poor.

However, in this embodiment of this application, when the specific video recording mode is implemented by using the phased video processing architecture (for example, the system architecture shown in FIG. 3), a video algorithm performed in the first phase may remain unchanged, and a video algorithm corresponding to the specific video recording mode is performed in the second phase. In this way, in the first phase, there is no need to additionally perform more video algorithms. When the video ISP chip performs real-time online processing, algorithm processing duration of each frame of raw image can meet the real-time constraint, so that the user can obtain a shot video when video recording ends, and the shot video obtained in real time is not too poor. Further, the second phase has a relatively weak real-time constraint, and the video algorithm corresponding to the specific video recording mode is performed in the second phase, to implement the specific video recording mode and obtain a video with higher quality.

Therefore, based on the phased video processing architecture, rich specific video recording modes can be implemented, and the real-time constraint and video quality can be balanced in the specific video recording mode.

Based on the foregoing embodiment, in the second processing process, the gallery application may perform a plurality of video algorithms, to process the first video file, to obtain the second video file with higher quality.

When the gallery application performs the plurality of video algorithms, the plurality of video algorithms may be further divided into a plurality of phases, and the phases are performed in a phased manner. Certainly, the plurality of video algorithms may alternatively not be divided into a plurality of phases. The following separately describes the two cases by using examples.

When the gallery application does not divide the plurality of video algorithms into a plurality of phases for execution, the plurality of video algorithms may be sequentially performed to obtain the second video file.

For example, refer to a diagram of a second processing process shown in FIG. 8A. After the electronic device 200 obtains the first video file and updates the first video file into the gallery application, the gallery application may first perform unpacking and decoding on the first video file to obtain the first video data, and then sequentially perform an algorithm 1 to an algorithm N on the first video data according to an execution sequence of the plurality of video algorithms. Specifically, the first video algorithm is used as an input of the algorithm 1, to obtain an execution result of the algorithm 1; the execution result of the algorithm 1 is used as an input of the algorithm 2, to obtain an execution result of the algorithm 2; and so on, until execution of the algorithm N is completed, to obtain an execution result of the algorithm N. The execution result of the algorithm N is encoded and packed, to generate the second video file. The second video file can be viewed by the user.

Optionally, the gallery application may perform the second processing process on the first video file only when a trigger detection module detects a trigger condition. The trigger condition may be that it is detected that the camera application is closed or the camera application runs in the background, or a third operation performed on a first thumbnail is received, or the camera application is closed or the camera application runs in the background, and a preset trigger condition is met.

Optionally, if the user actively triggers the gallery application to perform the second processing process, the electronic device 200 may perform the plurality of video algorithms at a time. Active triggering by the user may be triggering performed by the user by using an interaction control. For example, refer to FIG. 5C-1 to FIG. 5C-5. After detecting a tap operation performed by the user on the trigger control 517, the mobile phone 51 considers that the user actively triggers the gallery application to perform the second processing process. If the user does not actively trigger the second processing process, but the electronic device 200 automatically triggers the second processing process when determining that a system is idle or the user needs to operate (view, share, edit, or the like) a video, the electronic device 200 may perform the plurality of video algorithms in the second processing process in a phased manner. When the gallery application divides the plurality of video algorithms into a plurality of phases for execution, one phase may include one or more algorithms, and an execution sequence of the plurality of phases is determined by the execution sequence of the plurality of video algorithms.

For example, in the target recording mode, the target recording mode corresponds to the plurality of target video algorithms, an execution sequence of the plurality of target video algorithms is preset, and each phase includes one target video algorithm. In this case, the gallery application may sequentially perform a phased algorithm processing process of each target video algorithm based on the first video file and the metadata according to the algorithm execution sequence, to obtain the second video file.

The phased algorithm processing process of each target video algorithm may be as follows: detecting whether the preset trigger condition is met; if the preset trigger condition is met, performing a decoding operation on a first target video file to obtain first target video data; if a current target video algorithm needs to use metadata, performing the target video algorithm on the first target video data by invoking the metadata required by the target video algorithm, to obtain second target video data, or if a current target video algorithm does not need to use metadata, performing the target video algorithm on the first target video data to obtain second target video data; performing an encoding operation on the second target video data to obtain a second target video file, and storing the second target video file; detecting whether a preset stop condition is met; and if the preset stop condition is not met, entering a phased algorithm processing process of a next target video algorithm; or if the preset stop condition is met, determining the second target video file in the current phased algorithm processing process as the second video file, where the preset stop condition is that the plurality of target video algorithms are completely performed.

The first target video file is the first video file or a second target video file in a previous phased algorithm processing process, and the first target video data is the first video data or video data obtained by decoding the second target video file in the previous phased algorithm processing process.

In other words, in a phased algorithm processing process of a 1^{st} target video algorithm, the first target video file is the first video file, and the first target video data is the first video data. In phased algorithm processing processes of 2^{nd} and subsequent target video algorithms, the first target video file is a second target video file in a previous phased algorithm processing process.

Optionally, when each phased algorithm processing process is sequentially performed, if the current phased algorithm processing process is completed, the gallery application may replace the second target video file in the previous phased algorithm processing process in a storage medium with the second target video file corresponding to the current phased algorithm processing process, in other words, perform bitstream replacement. In this case, the gallery application may further display a thumbnail of a second target video file in each phased algorithm processing process. In other words, after each phased algorithm processing process is completed, the gallery application may display a result of the phased algorithm processing process. In this way, the processing result of each phased algorithm processing process is stored, so that the user can view the result of each phased algorithm processing process in the gallery application, thereby improving user experience.

Optionally, if it is detected, in the phased algorithm processing process of the target video algorithm, that a preset interrupt trigger condition is met, the gallery application stops performing the phased algorithm processing process, stores result data that has been processed in the phased algorithm processing process, and continues performing the interrupted phased algorithm processing process from an interrupt point based on the result data when it is detected that the preset trigger condition is met; or stops performing the phased algorithm processing process, stores the first target video file in the phased algorithm processing process, and re-performs the interrupted phased algorithm processing process based on the first target video file when it is detected that the preset trigger condition is met.

Optionally, the preset interrupt trigger condition includes at least one of the following: The electronic device 200 is powered off, a device temperature of the electronic device 200 is greater than a preset temperature threshold, a running memory of the electronic device 200 is less than a preset memory threshold, and an operation indicating to interrupt processing is received. The operation indicating to interrupt processing may be input by the user by using an interaction control displayed on the electronic device 200.

For example, refer to a diagram of phased processing in a second processing process shown in FIG. 8B. In response to a recording operation of the user, the electronic device 200 invokes a camera to capture and record an image signal, to obtain a raw image and record metadata required by a video algorithm in the subsequent second processing process. The video ISP chip processes the raw image into video data in real time, generates a bitstream (i.e., the first video file) based on the video data when recording ends, stores the bitstream (i.e., the first video file) and the metadata, and further updates the bitstream into the gallery application, so that the user can view a shot video in the gallery application.

After the electronic device 200 updates the bitstream into the gallery application, the gallery application may perform the second processing process on the bitstream, to obtain a bitstream with higher quality.

Specifically, the gallery application performs an algorithm trigger detection step, to determine whether to perform phased algorithm processing. When an algorithm trigger condition is detected, phased algorithm processing is performed. When no algorithm trigger condition is detected, whether an algorithm trigger condition is detected continues to be determined. The algorithm trigger condition may be, for example, that the user performs manual triggering by using an interaction button, the user views, edits, or shares the video, the system is idle, and the video is uploaded to a third-party platform.

When the algorithm trigger condition is detected, the gallery application performs a phased processing process of a 1^{st} algorithm. As shown in FIG. 8B, the phased processing process of the 1^{st} algorithm includes data preprocessing in a phased algorithm 1 and phased algorithm processing. In the data preprocessing in the phased algorithm 1, the stored bitstream (i.e., the first video file) is unpacked and decoded to obtain video data, and metadata required by the current algorithm is parsed out from the metadata. After the video data and the metadata required by the current algorithm are obtained based on the unpacking and decoding and the metadata parsing, the video data and the metadata required by the current algorithm are used as algorithm inputs to perform the phased algorithm 1 to perform video processing, and obtain an execution result of the phased algorithm 1. Encoding and packing are performed on the execution result of the phased algorithm 1, to generate a bitstream processed by the phased algorithm 1, the bitstream in the storage medium is replaced with the bitstream processed by the phased algorithm 1, and the metadata is stored.

Optionally, after the phased algorithm process of each algorithm is performed, whether a preset stop condition is met may be further determined. The preset stop condition is that the plurality of video algorithms are completely performed. That is, whether the plurality of video algorithms that need to be performed have been completely performed currently is determined. If the preset stop condition is met, the second video file is obtained; or if the preset stop condition is not met, algorithm trigger detection continues to be performed, to perform phased algorithm processing of a next algorithm.

As shown in FIG. 8B, after the process of the phased algorithm 1 is performed, the gallery application performs the algorithm trigger detection step again. When the algorithm trigger condition is detected, a phased processing process of a 2^{nd} algorithm is entered, in other words, data preprocessing in the phased algorithm 2 and processing in the phased algorithm 2 are performed. Similar to that in the process of the phased algorithm 1, the bitstream in the storage medium is unpacked and decoded to obtain decoded video data; metadata required by the current algorithm is parsed out from the metadata in the storage medium, and the phased algorithm 2 is performed based on the decoded video data and the metadata required by the current algorithm, to perform video processing to obtain an execution result of the phased algorithm 2; and the execution result of the phased algorithm 2 is encoded and packed, to generate a bitstream processed by the phased algorithm 2, the bitstream in the storage medium is replaced with the bitstream processed by the phased algorithm 2, and the metadata is stored.

By analogy, after a processing process of the phased algorithm N is performed, if it is detected that the preset stop condition is met, the second video file is obtained. In this case, the second video file is a bitstream processed by the phased algorithm N.

Comparatively, when the gallery application performs the second processing process, the second processing process is divided into a plurality of phases and performed in a phased manner, so that problems such as device freezing and device overheating can be further alleviated, and user experience can be improved. In addition, the plurality of video algorithms in the second processing process are performed in a phased manner, and after each algorithm is performed, a video file is generated through encoding, and the video file is stored. In this way, when an algorithm being performed is interrupted, it is not necessary to re-perform all algorithms, but the interrupted algorithm may be re-performed based on a video file corresponding to a previous video algorithm.

As shown in FIG. 8B, there is an interrupt handling step in each phased algorithm processing process. In the interrupt handling step, if it is detected that a preset interrupt trigger condition is met, an interrupt handling process is entered. The preset interrupt trigger condition includes but is not limited to: The user performs manual interruption by using an interaction control, the system is congested, the electronic device 200 is powered off, and a device temperature of the electronic device 200 is greater than a preset temperature threshold and a thermal runaway phenomenon occurs. The following describes the interrupt handling process with reference to diagrams of interrupt processing processes shown in FIG. 8C and FIG. 8D.

As shown in FIG. 8C, in a phased algorithm running process, interrupt detection is performed in real time to detect whether the preset interrupt trigger condition is met. When it is detected that the preset interrupt trigger condition is not met, the algorithm continues to be run. When it is detected that the preset interrupt trigger condition is met, some currently processed video data is stored, the some currently processed video data is encoded and packed to obtain some bitstreams, and corresponding bitstreams in the storage medium are replaced with the some bitstreams. When next algorithm trigger detection triggers a phased algorithm processing process, the algorithm continues to be run from an interrupt point based on the bitstream and the metadata that are stored in the storage medium. In other words, when the algorithm is interrupted, a processed result is stored, and some original bitstreams are replaced; and when the algorithm is triggered again for execution, the algorithm continues to be run from the interrupt point until completion.

As shown in FIG. 8D, different from FIG. 8C, when it is detected that the preset interrupt trigger condition is met, processed video data is not stored, and only raw video data is stored. The raw video data is packed and encoded to generate a bitstream. The raw video data is an input of the phased algorithm. For example, when the phased algorithm 2 is interrupted, the raw video data is the execution result of the phased algorithm 1. In this case, when the algorithm is interrupted, only the raw video data is stored. When the algorithm is triggered again for execution, the interrupted algorithm is run from the beginning.

It should be noted that, in a process of performing a plurality of video algorithms, the gallery application usually performs the video algorithms when the system is idle or system load is relatively low. If a priority of the video algorithm is relatively low, execution of the video algorithm is interrupted in a case in which the user uses the electronic device or the like. In this case, an interrupt handling mechanism is set, so that when the video algorithm is interrupted, the gallery application can better perform the plurality of video algorithms in the second processing process.

As shown above, when the video recording ends, the electronic device 200 obtains the first video file, and updates the first video file into the gallery application. The gallery application may process the first video file on an appropriate occasion, to obtain the second video file with higher quality.

After the first video file is updated into the gallery application, a thumbnail of the first video file is displayed in the gallery application. In this case, when the video recording ends, the thumbnail of the first video file is also displayed in the video recording viewfinder interface. The user may view the shot video by tapping the thumbnail of the first video file.

When the user taps the thumbnail of the first video file to play the shot video, but the electronic device 200 has not obtained the second video file, in some embodiments, the electronic device 200 may first play the first video file, trigger the gallery application to process the first video file to obtain the second video file, and replace the first video file in the storage medium with the second video file. In this way, when the user taps the thumbnail of the first video file next time, the electronic device 200 may play the second video file. In this case, from a perspective of user perception, after the shot video is placed in the gallery application for a period of time, when the user plays the video again, picture quality of the video is significantly improved compared with picture quality of the video played for the first time.

In some other embodiments, the electronic device 200 may alternatively immediately trigger the gallery application to perform the second processing process, and does not play the first video file when the gallery application performs the second processing process. In this case, from a perspective of user perception, after the user taps the thumbnail of the video file, the electronic device 200 plays the video after a period of time. The electronic device 200 triggers, in this period of time, the gallery application in a timely manner to perform the second processing process on the first video file, to obtain the second video file, and then plays the second video file after obtaining the second video file.

In some other embodiments, the electronic device 200 may immediately trigger the gallery application to process the first video file, and send a real-time processed video image for display, to perform "processing while playing". The following provides descriptions with reference to a block diagram of another procedure of a video processing method according to an embodiment of this application shown in FIG. 9. As shown in FIG. 9, the video processing method may include the following steps.

Step S901: The electronic device 200 displays a video recording viewfinder interface of a camera application.

Step S902: The electronic device 200 receives an operation performed on the video recording viewfinder interface, and enters video recording in a target recording mode.

Step S903: In a video recording process, the electronic device 200 obtains raw image data and metadata required by a plurality of target video algorithms corresponding to the target recording mode, and performs a first processing process on the raw image data by using an image signal processor, to obtain first video data, where the target video algorithms are video algorithms corresponding to the target recording mode.

Step S904: If a second operation performed on the video recording viewfinder interface is received in the video recording process, the electronic device 200 exits the video recording, obtains a first video file, stores the first video file and the metadata, and updates the first video file into a gallery application, where the first video file is a video file generated by encoding the first video data.

Step S905: The gallery application of the electronic device 200 displays a third thumbnail of the first video file.

For example, refer to FIG. 5C-1 to FIG. 5C-5. A thumbnail 524 is displayed in a video album interface 520, and the thumbnail 524 is the third thumbnail of the first video file.

Step S906: The electronic device 200 receives a fifth operation performed on the third thumbnail, where the fifth operation is used to trigger the gallery application to play the first video file.

For example, refer to FIG. 5C-1 to FIG. 5C-5. A user may tap the thumbnail 524 in the video album interface 520, and the mobile phone 51 displays the video viewing interface 514 in response to the tap operation. The user then taps a location of a video in the video viewing interface 514, to trigger the mobile phone 51 to play the video corresponding to the thumbnail 524. In this case, the fifth operation may include the tap operation on the thumbnail 524 and the tap operation on the video viewing interface 514.

Step S907: In response to the fifth operation, the gallery application of the electronic device 200 performs a decoding operation on the first video file to obtain the first video data, where the first video data includes a plurality of to-be-processed image frames; and for each to-be-processed image frame, sequentially performs each target video algorithm on the to-be-processed image frame according to an algorithm execution sequence by invoking metadata required by the target video algorithm, to obtain a target image frame, and sends the target image frame for display.

During specific application, after obtaining the first video data, the electronic device 200 buffers a preset quantity of to-be-processed image frames into a task queue, and sequentially performs algorithm processing on each to-be-processed image frame buffered in the task queue, to obtain a target image frame of each to-be-processed image frame.

For example, the target recording mode is a night motion mode, and the target video algorithms and the algorithm execution sequence are successively: image stabilization, noise reduction, and deblurring. In this case, for each to-be-processed image frame, the stabilization algorithm is first performed on the to-be-processed image frame to obtain an image-stabilized image frame. Whether all algorithms are performed is determined. If all the algorithms are performed, the target image frame is obtained, and the target image frame is sent for display. If not all the algorithms are performed, a next video algorithm continues to be performed. In this case, not all the video algorithms are performed, the noise reduction algorithm is performed on the image-stabilized image frame, to obtain a noise-reduced image frame, and whether all the algorithms are performed is determined. In this case, if not all the algorithms are performed, the deblurring algorithm continues to be performed on the image-stabilized image frame, to obtain a deblurred image frame, and whether all the algorithms are performed is determined. In this case, if it is determined that all the algorithms are performed, the deblurred image frame is determined as the target image frame, and the target image frame is sent for display. After the current target image frame is sent for display, whether all image frames are processed is determined. If all the image frames are processed, it is determined that all target image frames are sent for display, and encoding and packing operations are performed on the target image frames to obtain the second video file. If not all the image frames are processed, a next to-be-processed image frame continues to be processed. The foregoing process is repeated, until the target image frames of all the to-be-processed image frames are sent for display.

Step S908: After each target image frame is sent for display, the gallery application of the electronic device 200 performs an encoding operation on each target image frame to obtain a second video file, and replaces the first video file in a storage medium with the second video file.

It should be noted that, when the user needs to play the first video file, the first video file is further processed during video playing, and an image obtained through processing is sent for display in real time, to implement "processing while playing", thereby improving user experience. In this way, from a perspective of user perception, when the user plays the shot video for the first time, the user can view a video with relatively high video picture quality, and user experience is better.

To better describe the video processing solution provided in embodiments of this application, the following uses the night motion mode as an example for description with reference to diagrams of video processing processes in the night motion mode shown in FIG. 5A-1 to FIG. 5A-5 and FIG. 10.

As shown in FIG. 5A-1 to FIG. 5A-5, after the user selects a night motion mode option from the plurality of video recording modes displayed in the window 59 of the mobile phone 51, and taps the video recording control 56 in the video recording viewfinder interface 510, the mobile phone 51 enters a video recording process in the night motion mode.

As shown in FIG. 10, in the video recording process in the night motion mode, the mobile phone 51 captures an image signal by using a camera. In this case, the image sensor of the mobile phone 51 outputs a raw image, to output the raw image to a video ISP chip. In addition, gyro information and the raw image are additionally collected as metadata based on a requirement in the night motion mode. Optionally, to save storage space, a raw image with a low frame rate (1 fps to 5 fps) may be captured.

The video ISP chip processes the raw image into a full field of view (Field of View, FOV) video, and when the video recording ends, stores a full FOV raw bitstream and the metadata in a read-only memory (Read-Only Memory, ROM) of the mobile phone 51. The metadata includes the raw image and the gyro information. For example, the metadata in the ROM may be shown in FIG. 11. Image information such as the raw image and a depth map may be stored in a Trak of an MP4 file, and non-image information such as the gyro information may be stored in metadata of the MP4 file.

After the full FOV raw bitstream is stored in the ROM, the user can view the full FOV raw bitstream by using the gallery application. In this case, the processing process in the phase 1 is completed.

The gallery application of the mobile phone 51 performs algorithm trigger detection in real time, to determine whether the algorithm trigger condition is detected; and if the algorithm trigger condition is detected, sequentially performs the following in series: an image stabilization algorithm, a noise reduction algorithm, and a deblurring algorithm.

When the image stabilization algorithm is triggered for execution, the gallery application first performs image stabilization data preprocessing. Specifically, the full FOV raw bitstream is read from the ROM, and the gyro information is parsed out from the metadata. Then, image stabilization algorithm processing is performed based on the full FOV raw bitstream and the gyro information, to obtain an image-stabilized video. Finally, the full FOV raw bitstream in the ROM is replaced with the image-stabilized video, and the metadata continues to be stored. In this case, the user views the image-stabilized video in the gallery application.

When the noise reduction algorithm is triggered for execution, the gallery application first performs noise reduction algorithm preprocessing, in other words, decodes the image-stabilized video, to obtain a decoded video, and parses out the low-fps raw image from the metadata. Then, noise reduction algorithm processing is performed based on the decoded video and the raw image, to obtain a noise-reduced video. Finally, the image-stabilized video in the ROM is replaced with the noise-reduced video, and the metadata continues to be stored. In this case, the user views the image-stabilized and noise-reduced video in the gallery application.

It should be noted that the raw image includes a large quantity of image details, and the raw image may be used to restore a large quantity of image details lost due to noise removal when the video ISP performs the noise reduction algorithm, thereby improving video quality.

When the deblurring algorithm is triggered for execution, the gallery application first performs deblurring algorithm preprocessing, in other words, decodes the noise-reduced video, to obtain a decoded video, and parses out the gyro information from the metadata. Then, deblurring algorithm processing is performed based on the decoded video and the gyro information, to obtain a deblurred video. Finally, the image-stabilized video in the ROM is replaced with the deblurred video. In this case, the metadata may continue to be stored, or the metadata may be deleted. In this way, the user views the image-stabilized, noise-reduced, and deblurred video in the gallery application.

It may be understood that interrupt detection processing is performed in running processes of the image stabilization algorithm, the noise reduction algorithm, and the deblurring algorithm. For specific descriptions, refer to the foregoing descriptions. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

In the embodiments provided in this application, it should be understood that the disclosed apparatus, electronic device, and method may be implemented in other manners. For example, the described apparatus/electronic device embodiments are merely examples. For example, division into the modules or units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

The electronic device provided in embodiments of this application may include a memory, a processor, and a computer program that is stored in the memory and that can be run on the processor. When executing the computer program, the processor implements the method in any one of the foregoing method embodiments.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on an electronic device, the electronic device is enabled to implement the steps in the foregoing method embodiments during execution.

An embodiment of this application further provides a chip system. The chip system includes a processor, the processor is coupled to a memory, and the processor executes a computer program stored in the memory, to implement the method in the foregoing method embodiments. The chip system may be a single chip or a chip module including a plurality of chips.

In the foregoing embodiments, descriptions of the embodiments have respective focuses. For a part that is not described in detail or recorded in an embodiment, refer to related descriptions in other embodiments. It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application. In addition, in the description of the specification and the appended claims of this application, the terms "first", "second", "third", and the like are merely used for distinguishing, but cannot be construed as indicating or implying relative importance. Reference to "an embodiment", "some embodiments", or the like described in the specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A video processing method, applied to an electronic device, wherein a camera application and a gallery application are installed on the electronic device, and the method comprises:
displaying a video recording viewfinder interface of the camera application;
receiving a first operation performed on the video recording viewfinder interface, and entering video recording;
in a video recording process, obtaining raw image data and metadata required by a video algorithm in a second processing process, and performing a first processing process on the raw image data by using an image signal processor, to obtain first video data;
if a second operation performed on the video recording viewfinder interface is received in the video recording process, exiting the video recording, obtaining a first video file, storing the first video file and the metadata, and updating the first video file into the gallery application, wherein the first video file is a video file generated by encoding the first video data; and
performing, by the gallery application, the second processing process on the first video file by invoking the metadata based on the video algorithm in the second processing process, to obtain a second video file, and storing the second video file, wherein video quality of the second video file is higher than video quality of the first video file, wherein
the second processing process comprises a first-type video algorithm and/or a second-type video algorithm, the first-type video algorithm is a video algorithm that has not been performed in the first processing process, and the second-type video algorithm is a video algorithm that has been performed in the first processing process but whose execution effect does not reach an optimal target effect.

2. The method according to claim 1, wherein performing, by the gallery application, the second processing process on the first video file by invoking the metadata based on the video algorithm in the second processing process, to obtain the second video file comprises:
if the camera application is closed, the camera application runs in a background, or a third operation performed on a first thumbnail is received, performing, by the gallery application, the second processing process on the first video file by invoking the metadata based on the video algorithm in the second processing process, to obtain the second video file, wherein the first thumbnail is a thumbnail that is of the first video file and that is displayed in the video recording viewfinder interface after the second operation is received.

3. The method according to claim 2, wherein if the camera application is closed or the camera application runs in the background, performing, by the gallery application, the second processing process on the first video file by invoking the metadata based on the video algorithm in the second processing process, to obtain the second video file comprises:
if the camera application is closed or the camera application runs in the background, and a preset trigger condition is detected, performing, by the gallery application, the second processing process on the first video file by invoking the metadata based on the video algorithm in the second processing process, to obtain the second video file, wherein
the preset trigger condition comprises any one of the following: a fourth operation performed on a second thumbnail or a trigger control, an operation of starting the gallery application, an operation of viewing or playing the first video file, an operation of sharing the first video file, an operation of editing the first video file is received, a system of the electronic device is in an idle state, or a screen of the electronic device is turned off or enters sleep mode; and
the second thumbnail is a thumbnail that is of the first video file and that is displayed in the gallery application, and the trigger control is a control that is displayed in the gallery application and that is used to trigger video algorithm processing on the first video file.

4. The method according to any one of claims 1 to 3, wherein receiving the first operation performed on the video recording viewfinder interface, and entering the video recording comprise:
receiving an operation performed on a video recording mode control in the video recording viewfinder interface, and determining a video recording mode as a target recording mode; and
receiving an operation performed on a recording control in the video recording viewfinder interface, and entering video recording in the target recording mode, wherein the first operation comprises the operation performed on the video recording mode control and the operation performed on the recording control.

5. The method according to claim 4, wherein performing, by the gallery application, the second processing process on the first video file by invoking the metadata based on the video algorithm in the second processing process, to obtain the second video file comprises:
sequentially performing, by the gallery application based on the first video file and the metadata according to an algorithm execution sequence of a plurality of target video algorithms corresponding to the target recording mode, a phased algorithm processing process of each target video algorithm, to obtain the second video file, wherein the video algorithm in the second processing process comprises the plurality of target video algorithms, and the target video algorithm is the first-type video algorithm or the second-type video algorithm, wherein
the phased algorithm processing process of each target video algorithm comprises:
detecting whether the preset trigger condition is met;
if the preset trigger condition is met, performing a decoding operation on a first target video file to obtain first target video data; performing the target video algorithm on the first target video data to obtain second target video data, or invoking the metadata required by the target video algorithm and performing the target video algorithm on the first target video data to obtain second target video data; and performing an encoding operation on the second target video data to obtain a second target video file, and storing the second target video file;
detecting whether a preset stop condition is met; and
if the preset stop condition is not met, entering a phased algorithm processing process of a next target video algorithm; or
if the preset stop condition is met, determining the second target video file in the current phased algorithm processing process as the second video file, wherein
the preset stop condition is that the plurality of target video algorithms are completely performed; and
the first target video file is the first video file or a second target video file in a previous phased algorithm processing process, and the first target video data is the first video data or video data obtained by decoding the second target video file in the previous phased algorithm processing process.

6. The method according to claim 5, wherein the method further comprises:
if it is detected, in the phased algorithm processing process of the target video algorithm, that a preset interrupt trigger condition is met,
stopping performing the phased algorithm processing process, storing result data that has been processed in the phased algorithm processing process, and continuing performing the interrupted phased algorithm processing process from an interrupt point based on the result data when it is detected that the preset trigger condition is met; or stopping performing the phased algorithm processing process, storing the first target video file in the phased algorithm processing process, and re-performing the interrupted phased algorithm processing process based on the first target video file when it is detected that the preset trigger condition is met.

7. The method according to claim 6, wherein the preset interrupt trigger condition comprises at least one of the following: the electronic device is powered off, a device temperature of the electronic device is greater than a preset temperature threshold, a running memory of the electronic device is less than a preset memory threshold, or an operation indicating to interrupt processing is received.

8. The method according to claim 5, wherein the method further comprises:
when each phased algorithm processing process is sequentially performed, if the current phased algorithm processing process is completed, replacing the second target video file in the previous phased algorithm processing process in a storage medium with the second target video file corresponding to the current phased algorithm processing process; and
displaying, by the gallery application, a thumbnail of a second target video file in each phased algorithm processing process.

9. The method according to claim 4, wherein the method further comprises:
displaying, by the gallery application, a third thumbnail of the first video file; and
performing, by the gallery application, the second processing process on the first video file by invoking the metadata based on the video algorithm in the second processing process, to obtain the second video file comprises:
receiving a fifth operation performed on the third thumbnail, wherein the fifth operation is used to trigger the gallery application to play the first video file;
in response to the fifth operation, performing, by the gallery application, a decoding operation on the first video file to obtain the first video data, wherein the first video data comprises a plurality of to-be-processed image frames; and for each to-be-processed image frame, sequentially performing each target video algorithm on the to-be-processed image frame according to the algorithm execution sequence by invoking the metadata required by the target video algorithm, to obtain a target image frame, and sending the target image frame for display; and
after each target image frame is sent for display, performing, by the gallery application, an encoding operation on each target image frame to obtain the second video file, and replacing the first video file in a storage medium with the second video file.

10. An electronic device, comprising a memory, a processor, and a computer program that is stored in the memory and that is executable on the processor, wherein the processor implements the method according to any one of claims 1 to 9 when executing the computer program.

11. A computer-readable storage medium, wherein the computer-readable storage medium stores a computer program, and when the computer program is executed by a processor, the method according to any one of claims 1 to 9 is implemented.
